# EUROPEAN PATENT SPECIFICATION

(11) **EP 1 665 560 B1**
(45) Date of publication and mention of the grant of the patent: **30.06.2010**
(21) Application number: 04780984.3
(22) Date of filing: 13.08.2004
(51) Int. Cl.: H04B 1/38, H04M 1/00, H04M 7/00, H04M 11/00, H04W 8/18

(54) **MULTIPLE IMSI MULTIPLE/SINGLE MSISDN (MIMM/MISM) ON MULTIPLE SIMS FOR A SINGLE OPERATOR**
MEHRFACH-IMSI-MEHRFACH-/-EINZEL-MSISDN (MIMM/MISM) AUF MEHREREN SIMS FÜR EINEN EINZIGEN OPERATOR
IMSI MULTIPLE MSISDN MULTIPLE/UNIQUE (MIMM/MISM) DANS DES SIM MULTIPLES POUR UN OPERATEUR UNIQUE

(30) Priority: 13.08.2003 US 495031 P
(43) Date of publication of application: 07.06.2006
(73) Proprietor: Roamware, Inc., San Jose, CA 95128 (US)
(72) Inventor: JIANG, Yue, Jun, San Jose, CA 95128 (US)
(74) Representative: Wallis, Helen Frances Mary
(86) International application number: PCT/US2004/026229
(87) International publication number: WO 2005/017693

(56) References cited:
- EP-A2- 0 899 974
- WO-A2-98/26621
- WO-A2-98/26626
- US-A- 5 353 328
- US-A- 5 987 325
- US-A- 6 075 855
- US-A- 6 163 701
- US-B1- 6 192 255
- US-B1- 6 456 859

## Description

### TECHNICAL FIELD

The disclosed embodiments relate to mobile communications networks and devices, and more particularly to providing services for mobile communications device users.

### RELATED APPLICATIONS

This application claims the benefit of U.S. Provisional Patent application serial no. 60/495,031, filed August 13, 2003.

### BACKGROUND OF THE DISCLOSURE

Mobile communications device users are increasing dependent on the ability to use their mobile communications devices in every aspect of their lives. The addition of data services, such as for example SMS, to traditional voice services has made mobile communication devices even more useful for private and business use.

Many operators have rolled out general packet radio service (GPRS) service hoping to enhance revenue by offering data services. In particular, multimedia messaging service (MMS) messaging on top of GPRS bearer has been introduced in hopes of imitating the success of SMS. Unfortunately today's handsets generally do not allow a subscriber to simultaneously send a picture or download an email, and make or receive calls.

GPRS and MMS services have also led to the introduction of more powerful handsets that are bigger and more complex than legacy handsets. While many people desire these new handsets, they also feel that it is sometimes a good idea to carry the old handsets. Unfortunately, these handsets do not have the capability of sharing a single phone number. Call forwarding can help, but it is not automatic and requires constant change of the forward setting. Furthermore, forwarding of SMSs among these different handsets is still not solved. There are some SMS forwarding approaches, but they only partially solve the problem delivering an SMS to a reachable handset of a group of handsets. However, if none of the handsets are reachable, it is very difficult to automatically detect which handset is on in order for SMS to be resent.

Many operators, e.g. China Mobile, separate prepaid IMSI/MSISDN and postpaid IMSI/MSISDN ranges. This creates a problem when postpaid and prepaid subscribers want to switch statuses. For example, subscriber users must get a new SIM with a new IMSI and MSISDN, and forward calls from the old phone to the new phone. However this call forwarding does not support SMS forwarding. Furthermore, if the subscriber still carries the old handset in addition to the new handset, the old handset will not be able to pick up the call.

Some operators currently offer services that involve multiple IMSIs and a single MSISDN. Current services, however, have several disadvantages. For example, and individual SIM shows its own caller ID, rather than a common caller ID in MO call and SMS to the outside world. Another disadvantage is that call hunting occurs among all handsets, rather than only registered handsets, and call hunting cannot be based on the last registered handset first. Current services do not offer SMS hunting or SMS broadcasting, and cannot identify which number was originally SMSed. Current services allow multiple handsets simultaneous actions, in particular, multiple local calls, multiple roaming, some local and some roaming; but current services cannot disallow handsets because of other handsets' actions. Yet another disadvantage of current services is that billing cannot be easily related because no IMSIs or MSISDNs are special.

Today, customer care and tech support staff are typically equipped with mobile phones. When a staff member is called, and that staff member is busy, the call is typically forwarded to another available staff member. Call forwarding works for voice calls, but not for SMS because SMS cannot be forwarded. Furthermore, setting up call forwarding is a manual process, which is inconvenient. A complicating factor is that the forwarding process could go through all handsets rather than starting from one available handset. For example, assume A forwards to B, B to C and C to D. Consider a situation in which a caller calls A, but only D is available. The call is forwarded to A first, then B, then C and finally to D. Therefore, it is desirable to have a method and apparatus that overcomes the disadvantages stated of currently available multiple phone number and/or multiple phone service.

International patent application WO 98/26621 describes a system and method of forwarding data calls in a radio telecommunications network. The system provides network support that allows the forwarding of calls of different types to appropriate devices for each type of call, as identified by the call's service code.

International patent application WO 98/26626 describes a method for associating one directory number with two mobile stations within a mobile telecommunications network. An HLR associated with a particular mobile subscription correlates two IMSIs with a particular MSISDN. When an incoming call connection is received towards that MSISDN, the HLR makes a determination as to which one of the two mobile stations associated with the two IMSIs is active. The incoming call is then forwarded to the active mobile station. In case both mobile stations are active, the received incoming call connection is rerouted to the mobile station preassigned as a primary mobile station.

### BRIEF DESCRIPTION OF THE DRAWINGS

Embodiments of the invention are described with the aid of the drawings, which are not intended to be limiting. In the drawings, similar reference numbers identify similar elements or acts.
**Figure 1** is a block diagram illustrating an embodiment of a Signaling Gateway.
**Figure 2** is a block diagram illustrating a logical architecture of an embodiment of a Signaling Gateway.
**Figure 3** is a block diagram illustrating internal architecture of a Signaling Gateway 300.
**Figure 4** is a block diagram of one embodiment of a Signaling Gateway network architecture 400.
**Figure 5** is a block diagram illustrating an embodiment of a global title translation.
**Figure 6** is a diagram of a server farm architecture according to one embodiment.
**Figure 7** is a diagram of an embodiment including redundant Ethernet buses.
**Figure 8** is a diagram of a database architecture according to an embodiment.
**Figure 9** is an illustration of connect tile failover using multiple addresses in TNSNAMES.ORA according to an embodiment.
**Figure 10** is an illustration of load-balancing and active/active fail-over according to an embodiment.
**Figure 11** is an illustration of pre-establishment of a backup a connection according to an embodiment.
**Figure 12** is a block diagram of an embodiment in which two Signaling Gateways are each coupled to a GMSC-H.
**Figure 13** is a diagram of a signaling trace for Update Location according to an embodiment.
**Figure 14** is a diagram of a signaling trace for UpdateGPRSLocation according to an embodiment.
**Figure 15** is a diagram of a signaling trace for CancelVLRLocation according to an embodiment.
**Figure 16** is a diagram of a signaling trace for CancelGPRSLocation according to an embodiment.
**Figure 17** is a diagram of a signaling trace for SendAuthenticationInformation (SAI) according to an embodiment.
**Figure 18** is a diagram of a signaling trace for PurgeMS according to an embodiment.
**Figure 19** is a diagram of a signaling trace for a PRN request according to an embodiment.
**Figure 20** is a diagram of a signaling trace for a MT-SMS according to an embodiment.
**Figure 21** is a diagram of a signaling trace for a SMS Redelivery according to an embodiment.
**Figure 22** is a diagram of a further signaling trace for a SMS Redelivery according to an embodiment.
**Figure 23** is a diagram of a signaling trace for a Ready-For-SMS according to an embodiment.
**Figure 24** is a diagram of a signaling trace for supplementary services (SS) according to an embodiment.
**Figure 25** is a diagram of a further signaling trace for a supplementary services (SS) according to an embodiment.
**Figure 26** is a diagram of a signaling trace for a Stand-alone ISD according to an embodiment.
**Figure 27** is a diagram of a signaling trace for call forwarding according to an embodiment.
**Figure 28** is a diagram of a further signaling trace for call forwarding according to an embodiment.
**Figure 29** is a diagram of a signaling trace for ISUP loopback according to an embodiment.
**Figure 30** is a diagram of a signaling trace for an IN method of call hunting according to an embodiment.
**Figure 31** is a diagram of a signaling trace for SMS hunting according to an embodiment.
**Figure 32** is a diagram of a signaling trace for handset specific messaging according to an embodiment.
**Figure 33** is a is a block diagram illustrating an embodiment of an SMS request to change preferences.
**Figure 34** is a diagram of a signaling trace for changing preferences via USSD according to an embodiment.
**Figure 35** is a diagram of a signaling trace for a registration variation for MO-calls according to an embodiment.
**Figure 36** is a diagram of a signaling trace for a registration variation for MO-SMS according to an embodiment.

### ACRONYMS

Following are a list of acronyms used herein.
APMN: Associated Public Mobile Network for SMS Inter-working;
AuC: Authentication Center;
BCSM: Basic Call State Model;
CALEA: Communications Assistance for Law Enforcement Act;
CAMEL: Customized Applications for Mobile network Enhanced Logic;
CAP: CAMEL Application Part;
CDMA: Code Division Multiple Access;
CdPA: Called Party Address;
CDR: Call Detail Record;
CFB: Call Forwarding in Busy;
CFNRc: Call Forwarding on Not Reachable;
CFNRy: Call Forwarding on No Reply;
CFU: Call Forwarding Unconditional;
CgPA: Calling Party Address;
CSD: Circuit Switch Data;
CSI: CAMEL Subscription Information;
DB: Database;
D-CSI: Dialled Services CAMEL Subscription Information;
DDF: Digital Distribution Frame;
DP: Detection Point;
DPC: Destination Point Code;
DTN: Deflected To Number;
E1: Wide Area Digital Transmission Scheme used predominantly in Europe;
ECF: Event Charging Function;
EDP: Event Detection Point;
FPMN: Foreign Public Mobile Network who intends to partner with HPMN for Multiple MSISDN Service;
FTN: Forwarded-To-Number typically used in Call Forwarding;
FTP: File Transfer Profile or File Transfer Protocol;
FSMS: Fixed Line SMS;
Ga: Charging data collection interface between a CDR transmitting unit and a CDR receiving functionality;
Gb: Interface between an SGSN and a BSS;
Gc: Interface between a GGSN and an HLR;
Gd: Interface between an SMS-GMSC and an SGSN, and between an SMS-IWMSC and an SGSN;
Gf: Interface between an SGSN and an EIR;
GGSN: Gateway GPRS Service Node;
Gi: Reference point between GPRS and a packet data network;
GMLC: Gateway MLC;
GMSC: Gateway MSC;
GMSC-H: GMSC in HPMN;
GMSC-F: GMSC in FPMN;
GMSC-V: GMSC in VPMN;
Gn: Interface between two GSNs within the same PLMN;
Gp: Interface between two GSNs in different PLMNs;
GPRS: General Packet Radio Service;
GPRS-CSI: GPRS CAMEL Subscription Information;
gprsSSF: GPRS Service Switching Function;
Gr: Interface between an SGSN and an HLR;
GRX: GPRS Roaming Exchange;
Gs: Interface between an SGSN and an MSC/VLR;
GSM: Global System for Mobile Communications;
gsmSCF: GSM Service Control Function;
gsmSRF: GSM Specialised Resource Function;
gsmSSF: GSM Service Switching Function;
GT: Global Title (SS7 parlance);
GTT: Global Title Translation;
HLR: Home Location Register;
HPLMN: Home PLMN;
HPMN: Home Public Mobile Network who intends to provide MSISDN Service;
HSCSD: High Speed Circuit Switched Data;
ID: Identification;
IDD: International Direct Dial;
IDP: Initial DP;
IE: Information Element;
IF: Information Flow;
IMSI: International Mobile Subscriber Identity (of HPMN);
IMSI-H: HPMN IMSI;
IMSI-F: FPMN IMSI;
IN: Intelligent Network;
INAP: Intelligent Network Application Part;
IOSMS: Inter Operator SMS within HPMN;
IP: Intelligent Peripheral;
IPLMN: Interrogating PLMN;
IREG: International Roaming Expert Group;
ISC: IP Multimedia Subsystem Service Control Interface;
ISDN: Integrated Service Digital Network;
ISUP: ISDN User Part message from SS7 stack;
Iu: Interface between the RNS and the core network;
IVR: Interactive Voice Response;
kbit/s: Kilobits per second;
Ki: Authentication Key;
Kc: Ciphering Key;
LAN: Local Area Network;
LCF: Late Call Forwarding;
LCS: Location Services;
LMU: Location Measurement Unit;
LSA: Localised Service Area;
MAP: Message Application Part (from GSM 09.02 GSM Standards);
Mbit/s: Megabits per second (Mbit/s);
M-CSI: Mobility Management event Notification CAMEL Subscription Information;
MF: Mobile Forwarding;
MGT: Mobile Global Title (derived from IMSI);
MIMM: Multiple IMSI Multiple MSISDN Service;
MISM: Multiple IMSI Single MSISDN Service;
MLC: Mobile Location Center;
MMS: Multimedia Messaging Service;
MMSC: Multimedia Messaging Service Centre;
MO: Mobile Originating;
MSC: Mobile Switching Center;
MSISDN: Mobile Subscriber ISDN Number (phone number);
MSISDN-H: MSISDN of the Multiple MSISDN Service allocated by HPMN in HPMN numbering plan;
MSISDN-F: MSISDN of the Multiple MSISDN Service subscriber in the FPMN (Cooperating VPMN) numbering plan;
MSRN: Mobile Station Roaming Number;
MT: Mobile Terminated;
MTP: Message Transfer Part;
NA: North American;
N-CSI: Network CAMEL Service Information;
NNI: Network Node Interface;
OAM&P: Operations, Administration, Maintenance, and Provisioning;
O-BCSM: Originating Basic Call State Model;
OCN: Originally Called Number (same as ODN);
O-CSI: Originating CAMEL Subscription Information;
ODB: Operator Determined Barring;
ODN: Originally Dialed Number (same as OCN);
OM: Outreach Messaging;
OMAP: Operations, Maintenance, and Administration Part (SS7);
OR: Optimized Routing;
OSS: Operator Specific Service;
OTA: Over-the-Air;
PCI: Peripheral Component Interconnect;
PDA: Personal Digital Assistant;
PDP: Packet Data Protocol;
PIC: Point In Call;
PLMN: Public Land Mobile Network;
PMN: Public Mobile Network;
PRN: Provide Roaming Number MAP message;
PSL: Provider Subscriber Location;
R: Reference point between a non-ISDN compatible TE and MT;
RAID: Redundant Arrays of Inexpensive Disks;
SCP: Service Control Point;
SCCP: Signal Control Connection Part;
SG: Signal Gateway;
SGRF: Signal Gateway Relay Framework;
SGSN: Serving GPRS Service Node;
SIM: Subscriber Identity Module;
SIMM: Single IMSI Multiple MSISDN Service;
SLPI: Service Logic Program Instance;
SLR: Subscriber Location Report;
SM: Session Management;
SME: Short Message Entity;
SMF: Service Management Function;
SMLC: Serving MLC;
SMP: Service Management Point;
SMPP: Short Message Peer to Peer;
SMS: Short Message Service;
SMSC: Short Message Service Center;
SMSC-A: SMSC in APMN;
SMSC-F: SMSC in FPMN;
SMSC-H: SMSC in HPMN;
SMS-CSI: Short Message Service CAMEL Subscription Information;
SMTP: Simple Mail Transfer Protocol;
SNMP: Simple Network Management Protocol;
SPC: Signalling Point Code;
SRI: Send Routing Information MAP message;
SS: Supplementary Service;
SS7: Signaling System 7;
SS-CSI: Supplementary Service Notification CAMEL Subscription Information;
STK: Synthesis Toolkit in C++;
STP: Signaling Transfer Point;
T1: Wide Area Digital Transmission Scheme used predominantly in the United States;
TAF: Transparent Application Fail-over;
TAP: Transfer Accounting Procedure;
TADIG: Transfer Accounting Data Interchange Group;
T-BCSM: Terminating Basic Call State Model;
TCAP: Transaction Capability Part;
TCP/IP: Transmission Control Protocol/Internet Protocol;
T-CSI: Terminating CAMEL Subscription Information (in the GMSC);
TDMA: Time Division Multiple Access;
TDP: Trigger Detection Point;
TIF-CSI: Translation Information Flag;
TPDU: Transfer Protocol Data Unit;
TT: Translation Type (SS7 parlance);
U-CSI : USSD CAMEL Subscription Information;
UG-CSI : USSD General CAMEL Service Information;
Um: Interface between the mobile station (MS) and the A/Gb mode network;
UNI: User Network Interface;
USSD: Unstructured Supplementary Service Data;
Uu: Interface between the mobile station (MS) and the Iu mode network;
VHE: Virtual Home Environment;
VLR: Visited Location Register;
VLR-H: Serving VLR in HPMN;
VLR-F: Serving VLR in FPMN;
VLR-V: Serving VLR in VPMN (VPMN is not HPMN/FPMN);
VPLMN : Visited PLMN;
VPMN: Visited Public Mobile Network (other than HPMN or FPMN);
VMSC: Visited Mobile Switching Center;
VMSC-H: Serving VMSC in HPMN;
VMSC-F: Serving VMSC in FPMN;
VMSC-V: Serving VMSC in VPMN (VPMN is not HPMN/FPMN);
VT: Mobile Terminating in VMSC;
VT-CSI: VMSC Terminating CAMEL Subscription Information;
WAN: Wide Area Network;
WAP: Wireless Application Protocol; and
WiFi: Wireless Fidelity.

### DETAILED DESCRIPTION

A multiple IMSI multiple/single MSISDN (MIMM/MISM) method and apparatus is described. In one embodiment, the MIMM/MISM method and apparatus includes a MIMM/MISM service using multiple SIMs for a single operator. The MIMM/MISM service described herein provides a solution to the stated problems of current approaches. The MIMM/MISM service is an appropriate solution for several types of mobile communications subscribers. For example, the MIMM/MISM service is an appropriate solution for individual mobile communications subscribers who use one or more of a simple cell phone, a car-phone and a smart phone regularly depending on the time of the day and day of the week. The MIMM/MISM service also allows business email users to read emails on one handset while simultaneously sending and receiving calls and SMS on another handset. The MIMM/MISM service is also attractive to teens who love to have multiple cool handsets and send MMSs on one handset while chatting on another. The MIMM/MISM service also allows groups of subscribers with special functions, such as customer care and tech support staff, to receive SMSs and voice calls automatically on any reachable handsets.

Embodiments described herein include a multiple SIM single operator MIMM service. The service can be offered by an HPMN to its own customer base. It is useful for individual subscribers who have or intend to have multiple handsets, or for a group of subscribers with a group account ID who share their mobile service, such as customer care and tech support staff. Subscribers do not have to do anything special in order to use the service other than receive a labeled set of SIM cards and set up preferences. Preferences include, for example, which SIM card gets a call first and which card gets an SMS first, if registered. Each SIM can have its own MSISDN. In the case of a group of subscribers, each member of the group can get/retain his or her own MSISDN.

In one embodiment, the MIMM subscriber receives a set of SIMs. The SIMs are labeled for the subscriber's convenience, for example to help the subscriber easily remember a selected order of preference for receiving SMSs and voice calls. The network does not know handset preferences for calls and SMS. It only knows these preferences on SIMs. A subscriber defines order of preference on the labeled SIMs. For example, call preference: SIM 1, SIM 2, SIM 3 etc; SMS preference: SIM 3, SIM 2, SIM 1 etc. Once preference orders are defined on the SIMs, the subscriber can put the SIMs in any handset. For example, SIM 1 goes to the car phone, SIM 2 goes to the smart phone, SIM 3 goes to a regular cell phone etc. At any time, the subscriber can change the order of preference. The order of preference is changed via SMS, USSD, web, IVR, or customer care. The order of preference is changed by resetting the order, or by swapping SIMs among the handsets. For example, to change the SMS receive preference, the subscriber can set the new SIM order of preference for SMS to "SIM 2, SIM 3, SIM 1" as a replacement for "SIM 3, SIM 2, SIM 1" without moving SIMs among the handsets. Alternatively, the subscriber could swap the SIMs between the current handsets of SIM 2 and SIM 3.

If the subscriber wants to define preferences on handsets instead of SIMs, then the subscriber associates a SIM with a handset. The name of the handset is whatever the subscriber chooses, e.g. "car phone" or "cute phone" or "Nokia camera phone". This can be an option for the operator to deploy. In this way, the subscriber is defined once only (e.g. via web), the association is defined each time a SIM is put in a new handset. When changing orders of preference, the subscriber just uses handsets as reference names. For example, assume the subscriber has associated SIM 1 with the car phone, SIM 2 with the Smart phone, and SIM 3 with the regular cell phone. The subscriber can set the call order of preference to "Car phone, Cell phone, Smart phone" and the SMS order of preference to "cell phone, Smart phone, car phone". Again the subscriber can change the order of preference for handsets via USSD, SMS, IVR, or customer care at any time using any of the N SIMs/handsets, or using a web interface.

At any time, up to N SIMs can be registered with the operator's network, e.g. by using up to N handsets. However, only one handset will receive a call or SMS at one time if more than one is registered. In particular, the handset with the highest preference on SMS that is reachable will receive an SMS first and the handset with the highest preference on call will receive a call first. If only one handset is registered, only that handset will receive the call or SMS. When up to N handsets are registered, any handset can make calls, send SMS, or set up a GPRS/MMS session (if the handset has GPRS/MMS capability).

To the outside world, the subscriber appears to be the same irrespective of what handset he is using. There is a phone number for each SIM/handset. However irrespective of what handsets/SIMs is being used, the subscriber can receive the calls and SMS on any number. In addition, there is a single voicemail box per number. Use of different handsets may result in different switch CDRs. Even though the subscriber can have a single phone bill, the bill can clearly specify the separate usage of the different SIMs.

In one embodiment, a MISM service is an instance of a MIMM service in which there is a principle SIM with MSISDN-P to be used as the caller ID and the called/receiving number from the user perspective. From the HLR side, MIMM and MISM are essentially the same. That is, each has multiple IMSIs and MSISDNs. However, on the VLR side, MIMM allows different MSISDNs associated with different IMSIs while MISM allows a single MSISDN associated with different IMSIs. Because MISM is an instance of MIMM, the description focuses on MIMM and mentions MISM whenever necessary.

The MISM service described herein overcomes many of the disadvantages of prior services. In one embodiment, the MISM service requires the SIM or IMSI of all SIMs to be in a special range. All SIMs show a common caller ID in MO call and SMS to the outside world whether it is local or roaming. The MISM service supports single or multiple profiles. Call hunting occurs only among registered handsets. Call hunting can be specified on last registered handset first. The number originally called can be identified irrespective of the answering handset. Embodiments of the MISM service feature optimal routing and non-tromboning for LCF-like events (no answering, busy, out of coverage etc) to any FTN. Embodiments of the MISM service support SMS hunting and SMS broadcasting. MT call and MT SMS can be targeted to individual handsets only. The number originally SMSed can be identified. Simultaneous actions can be allowed/disallowed for multiple handsets, for example, multiple locals calls, multiple roaming calls, some local calls and some roaming calls. Another advantage of the MISM service described herein is that billing can be easily related because the IMSI-range is special. For example, a discount can be applied to the activities of all handsets as a whole.

A MIMM subscriber can also configure any number as his caller ID at any time. This makes an individual MIMM subscriber essentially like a MISM subscriber. The default caller ID is the MSISDN associated with the IMSI of the SIM in the handset where a call is made, or an SMS is sent. Since IMSI is still in the switch CDR, this will not affect the separate accounting of SIMs on a single phone bill.

Having a different MSISDN for each IMSI/SIM in the HLR side also allows call hunting. When there is more than one handset registered with the network, a handset can be hunted for receiving calls. If the preferred available handset is not answering or not reachable for a call, the less preferred available handset is called. If the preferred handset is busy, then the subscriber preference governs. For example, calls can be routed to the non-preferred handset. Enhanced mobile hunting is also supported by several methods which will be described later. The simplest of these methods is call forwarding. This method can introduce tromboning for outbound roamers, but is suitable for local subscribers such as customer care groups and tech support groups. Other methods can eliminate tromboning but require more switch resources (e.g. ISUP loopback method) or features (e.g. IN method). Only the call forwarding method is described.

In the call forwarding method, the last in the forwarding chain is always sent to a voicemail mailbox. In this way, all handsets share the same voicemail box. At any time, the subscriber can change the handset preference order. When the subscriber changes the handset preference order, if mobile hunting preference is set, the call forwarding chain is dynamically set based on the preference, and the voicemail number is set as the last in the chain of preference. Call forwarding for mobile hunting does not involve any manual subscriber set up of forwarding. It is based on the order of subscriber preference, and is set up automatically. The only thing the subscriber may want to do is choose a last forwarding number in the chain, e.g., voicemail.

The preference orders for calls and SMS can be the same for all MSISDNs, or different for each MSISDN of a subscriber or a group of subscribers. For example, in a customer care group or tech support group, if MSISDN-1 is called, the preference order can be MSISDN-1 and then MSISDN-2; but if MSISDN-2 is called, the preference order can be MSISDN-2 and then MSISDN-1.

A similar concept is applied to the MIMM service between GSM and CDMA handsets, for example when China Unicom attempts to migrate customers from GSM to CDMA. In this case, if the GSM number is called, the GSM handset has preference over the CDMA handset; while if the CDMA number is called, the CDMA handset has preference over the GSM handset. The voicemail box for the subscriber can be the same between GSM and CDMA if it is allowed. Otherwise, an individual number can have its own GSM box. Depending on which number is called, the voicemail box of that number is selected if none of the handsets answers the call.

For SMS hunting, an SMS is delivered to the first handset that is reachable based on the order of preference. If no handset is reachable, the sending SMSC will register a delivery status report with the HLR of the targeting number for future delivery. Later on, if the handset of a different number becomes reachable, the sending SMSC will be notified, and another attempt on the SMS to the original targeting number will be made. SMS hunting also has the option of delivering SMS to all reachable handsets based on subscriber preference. For example, if the subscriber left his preferred phone at home but carries another phone, the other phone can receive the SMS, or all the subscriber's selected associates (e.g. wife, colleague etc) can receive the SMS.

The operator can also specify which handset to target for particular messages, e.g. OTA messages. The OTA service can use different MSISDNs or IMSIs to target the handsets, e.g. for MMS, WAP or GPRS configuration. When an OTA message is relayed through a Signaling Gateway as further described herein, the Signaling Gateway recognizes the message as an OTA message. The Signaling Gateway can either send the message to all reachable handsets, or just to the handset indicated by the IMSI of the message. The OTA service normally interfaces with the Signaling Gateway indirectly via the SMSC. However the OTA service can also directly interface with the Signaling Gateway over TCP/IP.

Subscribers realize various advantages and conveniences using the MIMM/MISM service. For example: multiple phone numbers share a single mailbox number; the subscriber can receive calls and SMS on any handset on any number; a single MSISDN is configurable as caller ID (the default is the MSISDN associated with the IMSI of the SIM in the handset from which a call is made or an SMS is sent); the subscriber can receive a single bill with separate accounting, or separate bills (e.g. business, personal etc); the subscriber does not have to change SIMs when using a car phone or a Smartphone/PDA etc; the subscriber can carry the device that is best for the location rather than carrying all mobile devices; the subscriber can simultaneously carry on a voice call and a data session; the subscriber can have different preference orders for different numbers for both calls and SMSs; the subscriber can perform mobile hunting for different reachable handsets; and the subscriber can apply the service to a group of subscribers.

In a country where Mobile Number Portability is supported, it is possible for the operator to acquire subscribers from other operators and offer them this service. The MIMM/MISM service does not impact the subscriber's GPRS, MMS, USSD and SMS services. The MIMM/MISM service users appear as normal subscribers in most cases.

In various embodiments, the MIMM/MISM solution is includes a common Signal Gateway Relay Framework. The common Signal Gateway Relay Framework is also referred to herein as a Signal Gateway, a Signaling Gateway (SG), or a Gateway. The Signaling Gateway is applicable across GSM and CDMA technologies. The MIMM service in particular can be extended to support separate GSM handset and CDMA handsets, e.g. for operators like China Unicom and Telstra. This allows any handset to receive calls and SMSs on either the GSM number or the CDMA number. Depending on which number is called, the preference of mobile hunting for calls and SMS is different. For example, assume both CDMA and GSM handsets are reachable. If the GSM number is called, the GSM handset is called first before the CDMA handset is called; while if the CDMA number is called, the CDMA handset will be called first.

Embodiments of the Signaling Gateway described herein have the capability to impersonate various GSM network entities in order to provide Value-Added-Services. One embodiment includes a Signaling Gateway platform that is a SS7-based solution. The Signaling Gateway functions as virtual HLR, virtual VLR, virtual GMSC, virtual VMSC, virtual SMSC, and virtual service node depending on interactions with various SS7 network elements. The Signaling Gateway is virtual in the sense that it does not store subscription data as in a HLR, it does not have switching support as in a GMSC, and it does not have trigger mechanisms. The Signaling Gateway stores subscription information about MIMM/MISM service and registration information of MIMM/MISM subscribers.

### ARCHITECTURE

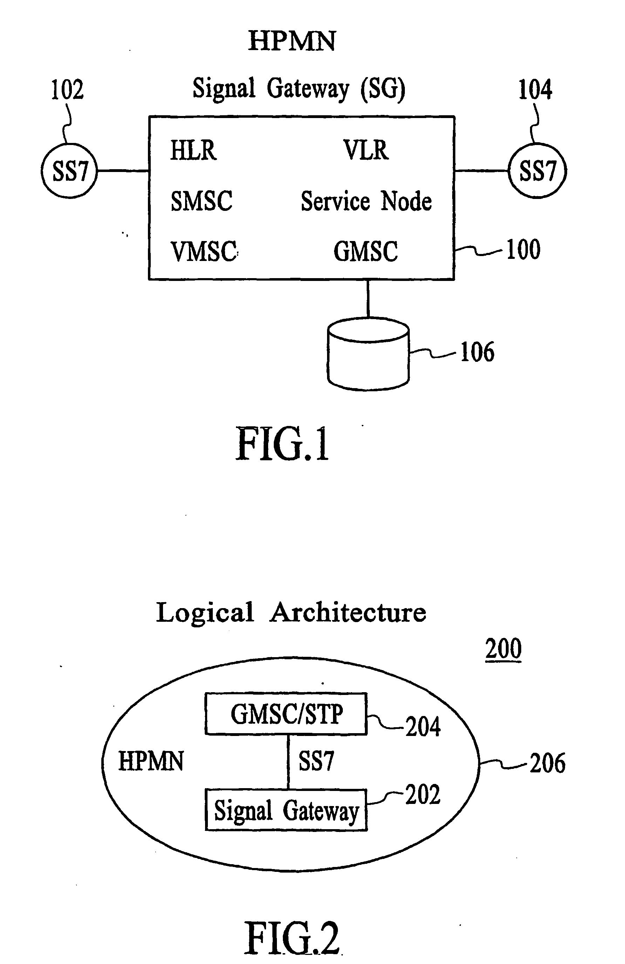

Embodiments of the method and apparatus include a Signaling Gateway, or signal gateway function. In one embodiment, the signal gateway function is a combination of a SCCP node and a Service Node. Referring to **Figure 1**, an embodiment of a Signaling Gateway 100 is shown. The signal gateway function is similar to that of a SCCP relay. The Signaling Gateway 100 is located within the HPMN network. It is connected to GMSCs/STPs of HPMN network via SS7 interfaces 102 and 104. Although the physical location of the Signaling Gateway 100 can be at the HPMN or FPMN based on operator requirements, the Signaling Gateway 100 is shown here at the HPMN.

The Signaling Gateway 100 includes an HLR, a VLR, an SMSC, a Service Node, and a GMSC. The Signaling Gateway 100 has access to a database 106 which stores information including information, including MSISDN-H. MSISDN-F, out-roamer information, and GT mapping per FPMN. The Signaling Gateway 100 also communicates with multiple SS7 nodes such as SS7 nodes 102 and 104.

The entity, or network operator partner hosting the Signaling Gateway 100 carries most of the logistic loads. For those partners that do not host the Signaling Gateway 100, routing configurations are used to send ISUP calls (possibly over dedicated leased lines) to the HPMN network and to direct MAP and TCAP (e.g. INAP) signaling to the Signaling Gateway 100 across countries.

In various circumstances, it may be desirable for the FPMN to host a Signaling Gateway 100. The Signaling Gateway 100 is involved when the IMSI-F is used to register a network, or when the MSISDN-F is queried. Hosting the Signaling Gateway 100 at the FPMN seems a natural choice because the Signaling Gateway 100 emulates a FPMN network element when the IMSI-F is used to register a network. In this situation, an explicit agreement of the FPMN facilitates checking of billing records by the HPMN or the FPMN.

For the example embodiments described herein, it is assumed that the Signaling Gateway 100 is hosted at the HPMN unless otherwise indicated. The basic signaling of the architecture is similar irrespective of the location of the Signaling Gateway 100. The responsibility for logistics, however, shifts more towards the hosting PMN when hosting is done by the HPMN. Wherever appropriate in the course of describing various technical details, a preferred location for the Signaling Gateway 100 is indicated.

An illustration of on embodiment of a logical architecture 200 is illustrated in **Figure 2**. The Signaling Gateway 202 is in communication with GMSC/STP 204 within HPMN 206.

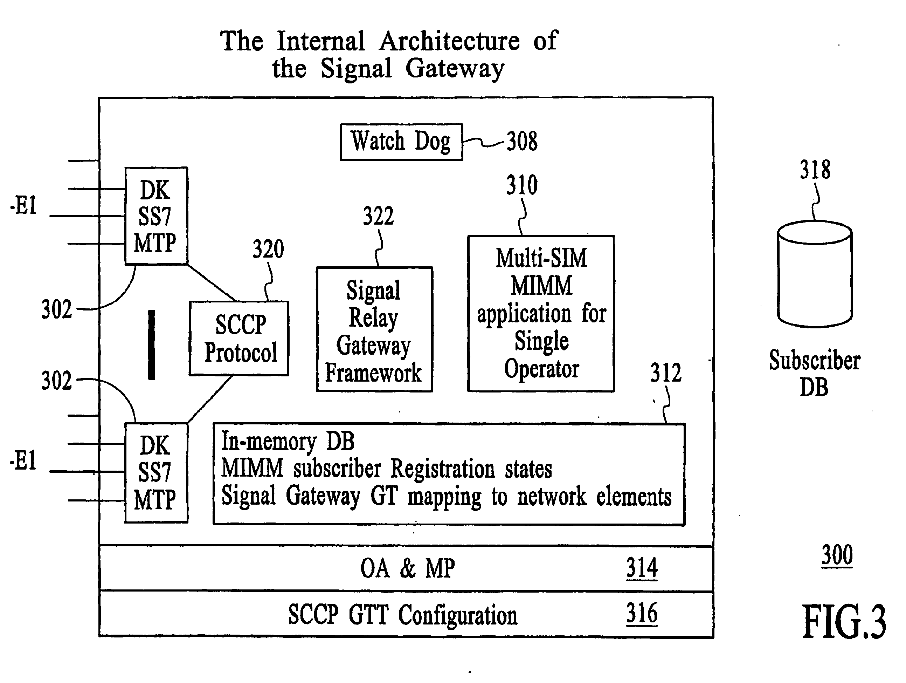

**Figure 3** shows an embodiment of an internal architecture of a Signaling Gateway 300. The Signaling Gateway 300, in one embodiment, is implemented on a Sun Solaris™ platform. An SCCP protocol 320 is processed in the host machine. The Signaling Relay Gateway Framework 322 hosts up to six DataKinetics™ Septel™ boards 302, each of which has four E1 interfaces. Each DK board 302 processes SS7 messages up to MTP 2/3. A MISM/MIMM service, or application, for a single operator is implemented on top of the Signaling Gateway 300.

The MIMM application uses an in-memory database (DB) 312. The DB 312 stores the various registration states for the MIMM subscribers and the Signaling Gateway global title mapping to various network elements. The mapping is established dynamically from a pool of global titles allocated to the Signaling Gateway to correspond to various network elements to avoid maintaining TCAP transaction states. There is also an external subscriber database 318 that stores configuration information, subscriber data (e.g. related SIMs) and subscriber preferences (e.g. preference orders for calls and SMS, a unique caller ID).

A watchdog process 308 which oversees the state of each Signaling Gateway process. Whenever a Signaling Gateway process is stopped for some reason, the watch dog kills the SS7 stack on each DK board 302 first before it kills each Signaling Gateway process. The watchdog process 308 then restarts each Signaling Gateway process, and restarts the SS7 stack on each DK board 302.

The Signaling Gateway 300 also has SNMP agent and MIB (not shown). The Signaling Gateway 300 includes SCCP GTT configuration interface 314 and include an MTP3 routing table. An OA&MP interface 316 is a web interface that allows operators to provision new customers and to perform other maintenance functions.

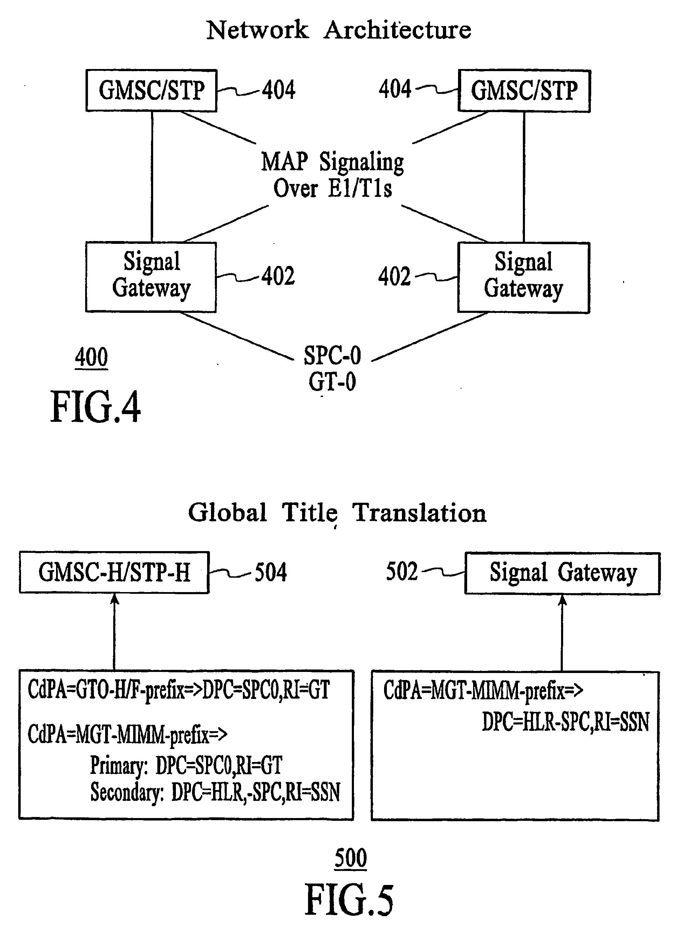

**Figure 4** is a block diagram of one embodiment of a Signaling Gateway network architecture 400. Architecture 400 includes a server farm of physical Signaling Gateways 402. For non-redundancy, one Signaling Gateway 402 is sufficient. For redundancy, two Signaling Gateways 402 is a minimum requirement.

Each Signaling Gateway 402 is cross-connected to a GMSC/STP 404 of HPMN using SS7 links over E1/T1 for MAP signaling. The number of Signaling Gateways 402, and the number of E1s and signaling links deployed depends on the dimensioning requirements of the operator. All Signaling Gateways 402 assume the same Signal Point Code (SPC0) and the same global title (GT0,) which has a HPMN version and FPMN version. GT0-H impersonates the signal gateway function as a HPMN network element. GT0-F allows the signal gateway function to impersonate a roaming partner network element.

### Architecture: Global Title Translation

**Figure 5** is a block diagram illustrating an embodiment of a global title translation 500. A MTP3 routing table and GTT translation on different GMSC-Hs/STP-Hs 504 are modified to reach the Signaling Gateway 502.

The GMSC-H/STP-H 504 in HPMN configures its GTT function to route MAP messages on MIMM subscribers through the Signaling Gateway 502. The MIMM subscribers IMSI-range are on a special range to simplify the re-routing and facilitate better control of the MIMM subscribers.

All Signaling Gateways are assigned two identical pools of GTs created by appending a number of digits to its common GT (i.e. GT0-H and GT0-F) to make 15 total digits. For example, if the additional number of digits required to make 15 digits is four, this creates a pool of 10000 GTs from each Signaling Gateway GT. These pools are used to represent network elements when relaying SCCP messages across the Signaling Gateway.

FPMN acts as a fictitious roaming network. It allows the Signaling Gateway 502 to impersonate foreign network elements to ensure correct HLR procedures regarding roaming, e.g., call barring while roaming. It applies generally for roaming and does not distinguish between different roaming partners.

The GTT function of GMSC-H/STP-H 504 translates these GT prefixes to the Destination Point Code (DPC) of the Signaling Gateway 502. It also translates the MGT (E-214 address) range from the special IMSI range of MIMM subscribers to the common SPC0 of the Signaling Gateway 502. When SPC0 is the DPC of the translation, the GTT translations on MGT and GT0-H/F support an active/active load-balance and fail-over set-up.

The GTT on MGT-MIMM-Prefix is not only active/active fail-over on the Signaling Gateway 502, but also supports a secondary backup when the entire signal gateway function goes down. In one embodiment, the backup is to go to normal HLR SPC (Signal Point Code). In this way, when the signal gateway function goes down, the MIMM subscribers are reduced to normal subscribers with multiple SIMs and MSISDNs.

### Architecture: Redundancy and Availability of Service

Carrier-grade systems require extremely high levels of network uptime. A typical requirement in many systems is to eliminate single points of failure in SS7 links, SS7 boards, and system chassis. Furthermore, systems require the ability to perform hardware and software upgrades without system downtime. There are also redundancy requirements on software applications, data storage, power supplies etc as listed below.
redundancy in signaling data links (e.g. nominated reserves or switched connections);
redundancy in signaling terminal devices (e.g. a common pool of terminals for the same signaling point);
redundancy of signaling links within a link set (typically operating with load sharing);
redundancy in signaling routes for each destination (possibly operating with load sharing);
redundancy in signaling boards;
redundancy in power supplies;
redundancy in software application instances;
redundancy in data storage;
redundancy in lan connection; and
redundancy in watch dogs.

One solution as adopted by HLR/MSC, sometimes referred to as the switch design, is to build all the above redundancy requirements within the single chassis completely for the signal gateway function. One advantage of this approach is that a single global title and SPC can be assigned to the Signaling Gateway. There is no need to replicate data across gateways since MAP transactions always return to the same node.

While such a design might be recommended for core telecommunications services such as voice call and SMS, the design could be overkill for the MIMM service. The failure of the signal gateway function at worst reverts the MIMM subscribers back to a normal subscriber service with un-correlated multiple SIMs and Multiple MSISDNs. That is, when the signal gateway function fails, the different SIMs/handsets can still simultaneously send and receive voice data, calls and SMS. However it is no longer possible to receive calls, SMS, USSD from any handset on any phone number. Calls, SMS, and USSD on MSISDN can be received on the handset that hosts the SIM whose IMSI is associated with the MSISDN in the HLR.

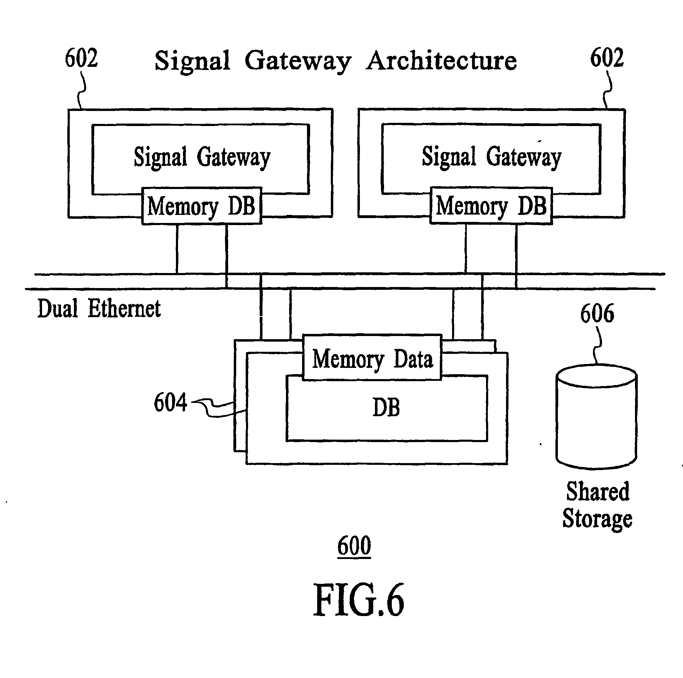

Given the possibly prohibitive cost of some switch design (in millions of US dollar range), another proposed implementation includes placing the signal gateway function in a server farm. For example, a server farm architecture 600 as illustrated in **Figure 6** consists of two Signaling Gateway servers 602 performing the signal gateway function, two database servers 604 for subscriber DB and logging, and a shared external RAID-10 disk array 606.

In one embodiment, all the servers are hosted in the Sun Fire™ V480 family. The Sun Fire™ 480 is configured with up to 4*900 MHz UltraSPARC™ III Cu processors with 8 MB of cache per processor. The Sun Fire™ V480 server supports up to 32 GB of memory. All memory is accessible by any processor. The Sun Fire™ V480 server also comes with a DVD-ROM drive, two hot-swappable (N+1) AC and DC power options, two hot-pluggable Fibre Channel disks, two integrated dual 10/100/1000 Mbps Ethernet ports, and six PCI slots, all in a 5 RU, 24-inch deep, rack-optimized chassis. The signal gateway function server also has up to 16 GB-RAM and 2*36GB disk. Each database server has up to 16 GB-RAM and 2*36 GB disk. The external storage array has at least 4*36 GB disk configured in a RAID 10 architecture.

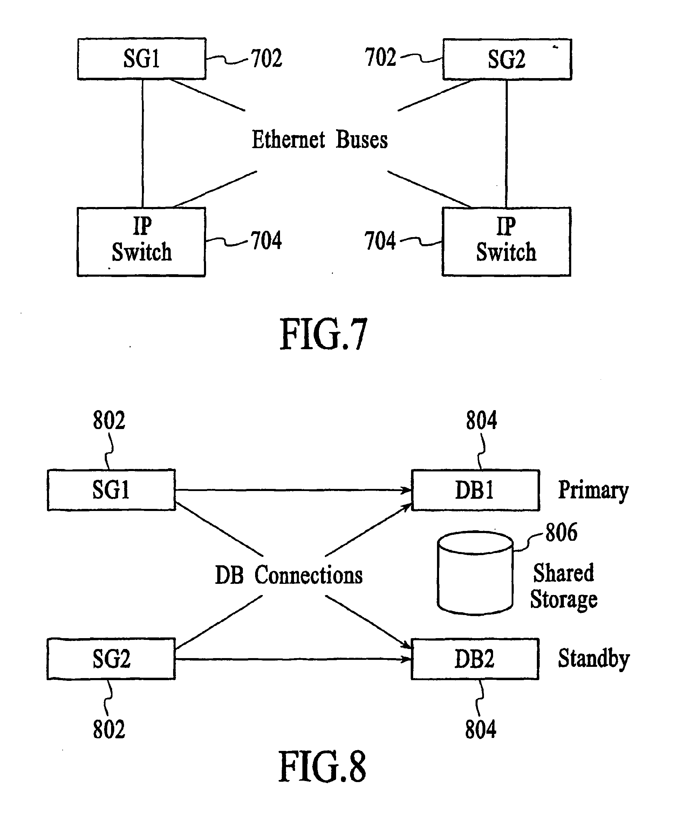

To deal with Ethernet failure, two Ethernet buses are configured in one embodiment as shown in **Figure 7**. Each Signaling Gateway 702 has 2 IP addresses connected to different segments of a LAN. Under normal operation, traffic is shared between the two Signaling Gateways 702. If one Signaling Gateway 702 fails, all traffic is routed on to the remaining Ethernet bus. The Ethernet buses are recommended to be configured in a cross-connect manner with HPMN's IP switches.

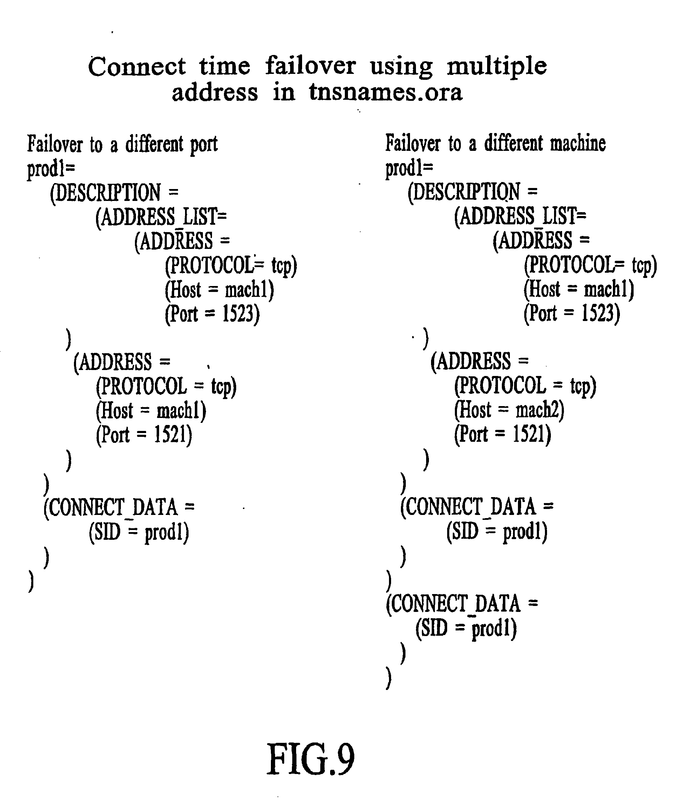

In one embodiment, a database architecture uses Oracle Net™ or Net 8 for transparent application failure (TAF). Such an architecture is illustrated in **Figure 8**, and includes two Signaling Gateways 802 cross-connected to two DBs 804. The Signaling Gateways 802 also can access a shared storage 806. A TNSNAMES.ORA configuration is used in one embodiment to support transparent fail-over across multiple instances of DBs on different ports of the same machine (Signaling Gateway) or across machines. **Figure 9** is an illustration of connect tile failover using multiple addresses in TNSNAMES.ORA according to an embodiment.

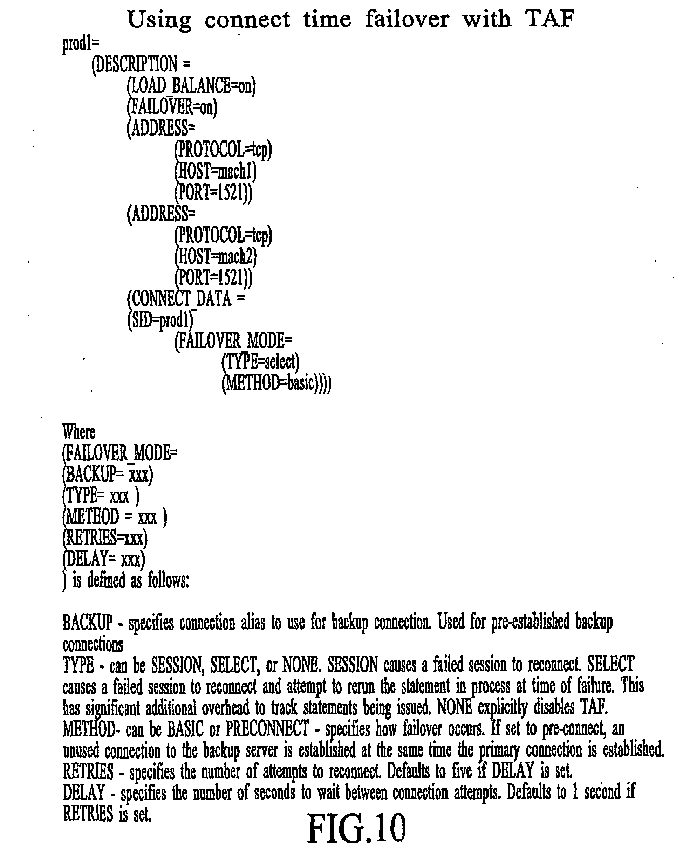

Embodiments of the signal gateway function also support load-balancing and active/active fail-over, as illustrated in **Figure 10****.**

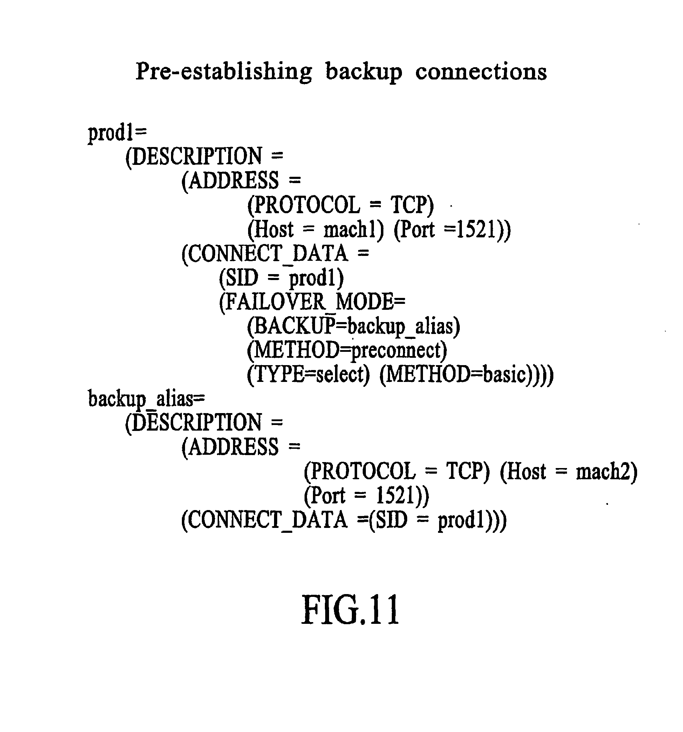

In one embodiment, an Oracle™ fail-safe with TAF architecture is recommended for an operator in active/standby mode to improve reliability. In the event of failure of the primary DB server (so connection error and an alarm will be generated), each gateway will open up a DB connection with the standby DB server. When the original primary DB server is completely restored, it can become the primary server again. This process is automatic. Service will not be interrupted. Oracle Enterprise™ edition supports fail-safe, transparent application fail-over. Pre-establishment of a backup a connection according to an embodiment is shown in **Figure 11****.**

In one embodiment, replication is not used since both primary and secondary DB servers share a RAID 10 storage array. The fail-over of DB connection to the standby server takes less than 30 seconds in general. The restoration of the primary server is just restricted by the hardware recovery (e.g. system reboot) rather than the Oracle™ DB recovery which only takes about a couple of minutes.

Alternatively, the two DB servers can have their own database storage where data is replicated across the two DB servers. In this case, because replication takes time and eats performance, it may not work seamlessly for all situations. However new subscriber preferences and data will be handled properly.

When both DB servers are down, based on operator requirements, there are at least two options, including: 1) each Signaling Gateway completely shuts down the protocol stacks to reject all SS7 messages. The applications do not proceed until DB connections are re-established. Only after that, protocol stacks and SS7 connections values will open up again; and 2) each Signaling Gateway functions based on default since there will be no subscriber preference orders for SMS and voice calls. For related SIMs that do not have records in the memory DB, the SIMs /handsets function independently as if they are not MIMM subscribers. For related SIMs that have records in the memory DB (either preloaded at initialization time or previously cached), the signal gateway function will apply the default behavior as follows. For SMS, one reachable handset is selected to receive SMS. Alternatively, all reachable handsets receive the same SMS. For calls, one reachable handset is selected to receive calls. If mobile hunting is the default for all subscribers, then other reachable handsets are automatically set as forwarding in a randomly selected chain of order.

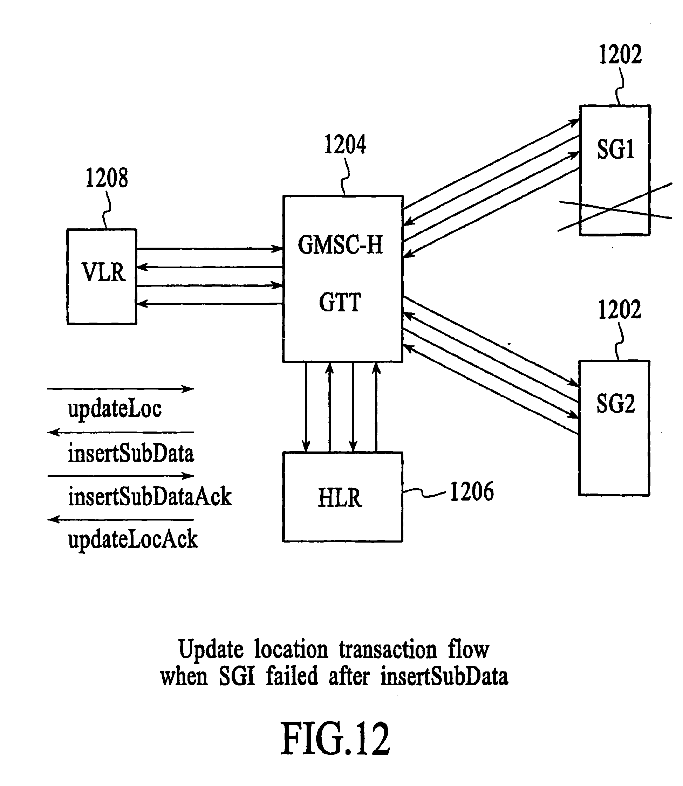

As discussed above, redundant Signaling Gateways are cross-connected with GMSCs/STPs using multiple signal links in link sets. If one link goes down, other links in the link set can still process the SS7 messages. **Figure 12** is a block diagram of an embodiment in which two Signaling Gateways 1202 are each coupled to a GMSC-H 1204. The GMSC-H 1204 is coupled to a VLR 1208 and a HLR 1206. The GTT function on DPC=SPC0 will automatically select the still-alive Signaling Gateway 1202 when one Signaling Gateway 1202 goes down. When both Signaling Gateways 1202 go down, HLR 1206 takes over to support MIMM subscribers as normal subscribers.

If one Signaling Gateway 1202 goes down in the middle of a MAP transaction, the other Signaling Gateway 1202 takes over the transaction. The Signaling Gateway 1202 does not change TCAP transaction, just the SCCP relay with MAP parameters and the SCCP address.

For example, on receiving the VLR's ack to insertSubData from Signaling Gateway 1202 "1", GMSC-H will switch over to the Signaling Gateway 1202 "2" when Signaling Gateway 1202 "1" fails.

Although the Signaling Gateway 1202 does not need to maintain TCAP transactions for transactions it does not itself initiate, it still must deal with subscriber registration information and network elements mapping to a Signaling Gateway 1202 GT. It also needs to handle TCAP transactions it initiates, for example when the Signal Gateway function itself initiates a location update.

In one embodiment, this is addressed using a 2-phase commitment method for memory DB. In this method, any update on memory data will not return control unless it is committed by all (e.g. two) Signaling Gateways.

Since each Signaling Gateway uses the same two GT0-H/F-prefix pools for mapping network elements, duplications could arise if there are simultaneous registrations from the same network elements. However this situation is rare and duplication simply incurs more GTs from the pool and will not affect the operation. Alternatively, the memory DB can be shifted to DB servers which have a shared RAID storage array. However DB access can increase delay.

Although there is a dual network connection to commit data across Signaling Gateways, it is still prudent to protect the gateways when both connections break. In such incidents, all memory DB data are copied to the shared DB servers. No new data will be created on the memory DB. If connections to DB servers go down, the treatment is the same as if the DB servers go down, as described above.

The GTT configuration at GMSC-H does not require translation from one global title into another global title. The translation capability from a global title to a SPC is sufficient. The GTT configuration also does not assume any new translation type. Only translation type 0 is used.

In addition to the signal board redundancy across both gateways, there could also be board redundancy within each gateway. Each gateway can host one board per PCI slot. Up to six boards are possible with the Sun Fire™ V-480 family. All boards in the same server send messages to the same SCCP application. If the application dies, a watch dog process restarts the application again. There is also a UNIX cron that oversees the watch dog and re-starts the watch dog when it dies. The watch dog periodically monitors the SCCP application. When an application fails, the watch dog kills the SS7 stack on each DK board before it kills the application. This forces the GSMC-H to apply SS7 based switch-over. The watch dog re-starts the SCCP application first and then restarts the SS7 stack on each DK card. This whole process typically takes a couple of minutes. The watch dog can also be refined to read health status messages from the application. This is useful when an application does not die, but hangs. An application is considered dead if the health message is not received. In the worst case, if the application malfunctions while still producing health status messages, but fails to properly handle the SS7 messages intended for it, a DK board may not be able to distribute its messages. Buffers (e.g., 64k bytes) will overflow within approximately ten seconds, and all links are eventually brought down. The other Signaling Gateway is automatically switched over by the GMSC-H in this case.

### LOGISTICS

Some logistics considerations for mobile communications network operators include the following.

The operator reserves one or more sequential blocks of IMSI ranges to support the MIMM service. The subscriber obtains a new set of SIMs within this special IMSI range although the main phone number will remain the same as before. Each SIM have its own MSISDN, but there is only one voicemail box or FTN setting for all SIMs. The SIMs sent to subscribers are labeled SIM 1, SIM 2, SIM 3 etc.

The operator assigns a common HPMN global title GT0-H, a common FPMN global title GT0-F, and a common SPC to one or more Signaling Gateways, where FPMN is the fictitious roaming network. The two GTs are extended with postfixes to make the total number of digits 15 to create pools for both HPMN and FPMN.

The operator configures the GTT at GMSC/STP to route all global titles on MGT of the special IMSI range for MIMM service and the Signaling Gateway GT prefixes (GT0-prefixes-H/F) through the Signaling Gateway without changing the routing indicator based on the GTT configuration mentioned before.

The operator provides an IP address and two TCP/IP connection to each Signaling Gateway.

### MIMMSUBSCRIBER INFORMATION

Based on the messages that get routed via the Signaling Gateway, various pieces of information are extracted and maintained. Table 1 lists some of the information elements extracted.

**TABLE 1**

| **Subscriber information** | **Notes** |
|---|---|
| Related SIM records | Such a record relates all IMSIs/SIMs of a MIMM subscriber |
| Each IMSI can have associated caller ID MSISDN-P. All IMSI can have the same caller ID. | The caller ID can be defined per IMSI-lever or whole Related SIM records |
| Preference Order for SMS | This defines the preference order for handsets/SIMs to receive MT SMS. The order can be per IMSI/MSISDN based |
| Preference Order for call | This defines the preference order for handsets/SIMs to receive MT call. The order can be per IMSI/MSISDN based |
| Currently-Registered | Boolean variable per IMSI of a MIMM subscriber to indicate if registered with a network |
| GPRS-Attached | Boolean variable per IMSI of a MIMM subscriber to indicate if GPRS-attached |
| HLR-H | HLR address per IMSI of a MIMM subscriber |
| Current-Location | Current VLR location per IMSI of a MIMM subscriber |
| Current-GPRS-Location | Current GPRS location per IMSI of a MIMM subscriber |
| Previous-Location | Previous VLR location per IMSI of a MIMM subscriber |
| Previous-GPRS-Location | Previous GPRS location per IMSI of a MIMM subscriber |
| SMS-Failed | Boolean variable per Related SIM record |
| SG-General | Denotes a generic Signaling Gateway GT (e.g. GT0-H or GT0-F) |

### DETAILED SIGNAL FLOWS

Based on the logistics and the information above in Table 1, we shall now consider detailed signal flows for the following scenarios:
Location update;
UpdateGPRSLocation;
Cancel Location;
Authentication;
PurgeMS;
MO (MO-SMS, MO-CALL, and MO-GPRS);
MT (MT-SMS and MT-CALL);
SMS Re-Delivery Management
Ready-for-SMS;
Supplementary Services; and
USSD.

### DETAILED SIGNAL FLOWS: Location Update

It is assumed the SIM IMSI-S is registering with a VLR at any HPMN or roaming partner VPMN in the world. VLR initiates MAP Update Location message by deriving MGT (E.214) based on IMSI-S. Due to SCCP routing defined by the GTT function at GMSC-H/STP-H, the message is routed to the Signaling Gateway. The Signaling Gateway performs a transformation as shown in Table 2.

**TABLE 2**

| **Update Location from VLR** | | **Message from Signaling Gateway to HLR-H** | |
|---|---|---|---|
| SCCP Called Address: | | SCCP Called Address: | |
| GT: | MGT | **GT:** | **HLR-H** |
| SSN: | 6 | SSN: | 6 |
| TT: | 0 | TT: | 0 |
| SCCP Calling Address: | | SCCP Calling Address: | |
| GT: | VLR | **GT:** | **SG-VLR** |
| SSN: | 7 | SSN: | 7 |
| TT: | 0 | TT: | 0 |
| MAP level parameters: | | MAP level parameters: | |
| IMSI: | IMSI-S | IMSI: | IMSI-S |
| MSC address | VMSC | **MSC address:** | **SG-VMSC** |
| VLR/SGSN address | **VLR** | **VLR address:** | **SG-VLR** |

Where SG-VLR, SG-VMSC and SG-HLR-H represent the GTs of the Signaling Gateway that correspond to the VLR, VMSC, HLR-H network elements. These GTs are allocated from the pools of GTs created from the Signaling Gateway GT-X (GT-H, GT-F) by appending a number of digits to the Signaling Gateway GT-X to make the total number of digits 15, e.g., if the Signaling Gateway GT-X has 11 digits, the pool size will be 10K.

In HLR, a Signaling Gateway GT is thus stored as MSC and VLR address instead of the actual addresses. This ensures that all MAP INSERT SUBSCRIBER DATA messages and SMS messages, routing query on calls will pass through the Signaling Gateway and hence its contents can be modified appropriately (for example, the MSISDN-S can be changed to another MSISDN-S apart from performing routing level address changes).

Now we consider MAP InsertSubscriberData. The message comes back through the Signaling Gateway so MSISDN-S and FTN can be modified as shown in Table 3.

**TABLE 3**

| **Insert Subscriber Data from HLR-H** | | **Message from Signaling Gateway to VLR via GMSC-H** | |
|---|---|---|---|
| SCCP Called Address: | | SCCP Called Address: | |
| GT: | **SG-VLR** | **GT:** | **VLR** |
| SSN: | 7 | SSN: | 7 |
| TT: | 0 | TT: | 0 |
| SCCP Calling Address: | | SCCP Calling Address: | |
| GT: | HLR-H | **GT:** | **SG-HLR-H** |
| SSN: | 6 | SSN: | 6 |
| TT: | 0 | TT: | 0 |
| MAP level parameters: | | MAP level parameters: | |
| MSISDN: | MSISDN-S | **MSISDN:** | **SG-MSISDN-S** |
| FTN: | FTN | **FTN:** | **SG-FTN** |

The message is routed to the VLR. SCCP Calling Party Address is replaced with the Signaling Gateway GT. This guarantees that when the reply for this message is sent, GMSC-H can route it to the Signaling Gateway before it is routed back to the HLR.

SG-MSISDN-S denotes the resultant MSISDN to be sent to the VLR based on the subscriber preference for caller ID. Normally, this is unchanged for the MIMM service. The subscriber may select a unique number as his number to the outside world. For example, if the subscriber sets a MSISDN-S of a SIM as the caller ID for all SIMs in the preference, in which case the MSISDN-S will be termed as MSISDN-P, then MSISDN-P will be returned to replace MSISDN-S in the insertSubscriberData message.

Similarly, SG-FTN denotes the resultant FTN values to be sent to VLR based on the subscriber preference order for calls. The original FTN value of the SIM will be stored for the Related SIMs if it is not already stored. For example, in the IN method for enhanced call hunting to be described later, the SG-FTN values will be empty for the call forwarding conditions (e.g. not-answering, not reachable) to be mobile hunted.

Only applied to the currently registered handsets, using the preference order on calls, a dynamic chain of forwarding is dynamically defined by the Signaling Gateway via modified ISD to the VLR and stand-alone ISDs to the other registered handsets. The last of the chain will be set to whatever FTN values are associated with the last handset in the chain.

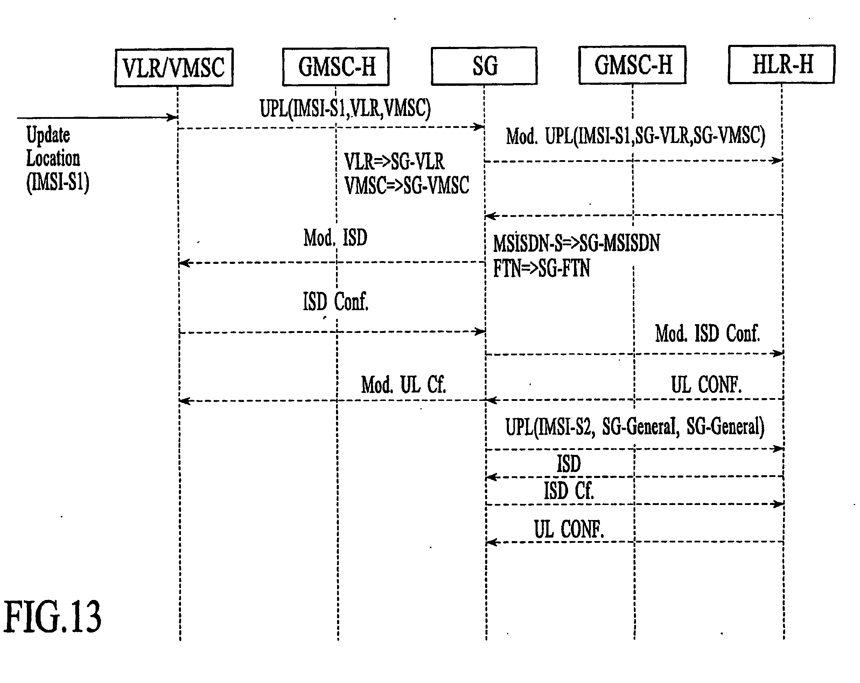

An example signaling trace for Update Location is shown in **Figure 13****.**

After each successful VLR location update of a SIM, since the handset can receive calls and SMS on any MSISDN associated with the Related SIMs of the SIM, location update must also be performed on any SIM that has not been registered.

Related SIM records are loaded into memory DB from the subscriber DB. Each related SIM record also contains the preference orders for calls and SMS and the default caller ID. The Signaling Gateway maintains in its memory DB the following set of Boolean and non-Boolean variables for each IMSI-S of the Related SIM record loaded from DB:
IMSI;
MSISDN;
FTN;
Currently-Registered;
Current-Location;
Current-GPRS-Location;
Previous-Location;
Previous-GPRS-Location;
GPRS-Attached; and
HLR-Location.

There is also a record-level Boolean variable. This variable is used to control ReadyForSMS propagation.

For each successful new handset/SIM registration, if SMS-Failed is true, then the Signaling Gateway also issues ReadyForSMS for all the other IMSIs in the Related SIM record. ReadyForSMS will be described later. A registration of handset/SIM/IMSI-S is considered a new registration if the Current-Location if the IMSI-S is empty or has the value SG-General.

For the successful registration of the current SIM, if the Current-Location variable for IMSI-S is not empty, the value of the Current-Location variable of IMSI-S becomes the value of the Previous-Location variable, while the new SG-VLR is the value of the Current-Location variable of IMSI-S. If the Current-Location variable for IMSI-S is empty, the value of the Current-Location variable of IMSI-S is the new SG-VLR as shown below:
IMSI: IMSI-S;
MSISDN: MSISDN-S;
FTN: FTN-S;
Currently-Registered: true; and
Current-Location: SG-VLR.

For any Related SIMs that are not currently-registered, SG-General is used as the VLR and VMSC location of the SIM. A new location update is issued as shown in Table 4.

**TABLE 4**

| **Update location from signal gateway to HLR** | |
|---|---|
| SCCP Called Address: | |
| GT: | MGT |
| SSN: | 6 |
| TT: | 0 |
| SCCP Calling Address: | |
| GT: | SG-General |
| SSN: | 7 |
| TT: | 0 |
| MAP level parameters: | |
| IMSI: | IMSI-S |
| MSC address | SG-General |
| VLR address | SG-General |

The HLR associated with the MGT of IMSI-S of the unregistered SIM returns to the Signaling Gateway as shown in Table 5.

**TABLE 5**

| **insertSubData from HLR to Signal Gateway** | |
|---|---|
| SCCP Called Address: | |
| GT: | SG-General |
| SSN: | 6 |
| TT: | 0 |
| SCCP Calling Address: | |
| GT: | HLR-H |
| SSN: | 7 |
| TT: | 0 |
| MAP-level-parameters: | |
| MSISDN: MSISDN-S | |
| FTN: FTN-S | |

On each successful location update of an unregistered SIM, the following variables of the SIM will be set in the memory DB:
IMSI: IMSI-S;
MSISDN: MSISDN-S;
FTN: FTN-S;
Currently-Registered: true; and
Current-Location: SG-General.

Note that SG-VLR and SG-VMSC could be a HPMN GT or a FPMN GT reserved for the Signaling Gateway. This is because HPMN HLR procedure could be based on subscriber network location. For example, barring for outgoing calls while roaming will become simply barring for all outgoing calls to the VLR in the roaming network. If SG GT were a HPMN GT, then the HLR might still think the roamer is not roaming. As another example, sometimes call forwarding and call barring services registration may be not allowed while roaming.

To support the general case, embodiments support a configuration option to enable FPMN GT support for the signal gateway function.

When FPMN GT support is enabled, if the real VLR is a roaming partner network element, then SG-VLR-F is used (allocated from the pool of GT0-F-prefix); otherwise SG-VLR-H is used (allocated from the pool of GT0-H-prefix). However, since SMS will be forwarded to wherever HLR-H indicates when it is queried by SRI-SM(MSISDN-H), when the MIMM subscriber registers at a roaming partner network, the Signaling Gateway can present one of two options to represent VMSC to the HLR-H:
a) SG-VMSC-H; or
b) SG-VMSC-F.

Option a) has the advantage that a foreign SMSC can forward SMS through the Signal Gateway Function. Some HLRs, however, might not like VLR to be "roaming" while VMSC is not. Option b) has the advantage that both VLR and VMSC appearing to be roaming. However, foreign SMSCs might not know how to route SG-VMSC-F. SMS-Relay (a product available from Roamware™), can be used to solve this potential problem. For an SRI-SM query, either the International STP/GTT diverts the query to the SMS-Relay, or the GMSC/STP MAP policing function redirect SRI-SM with foreign calling GT through the SMS-Relay. SMS-Relay returns the Signaling Gateway as the VMSC address to which the foreign SMSC can now forward the message. Once the message reaches the Signaling Gateway, the signal gateway function can take over to deliver the message to the real VMSC, since the message contains the IMSI.

### DETAILED SIGNAL FLOWS: Update GPRS Location

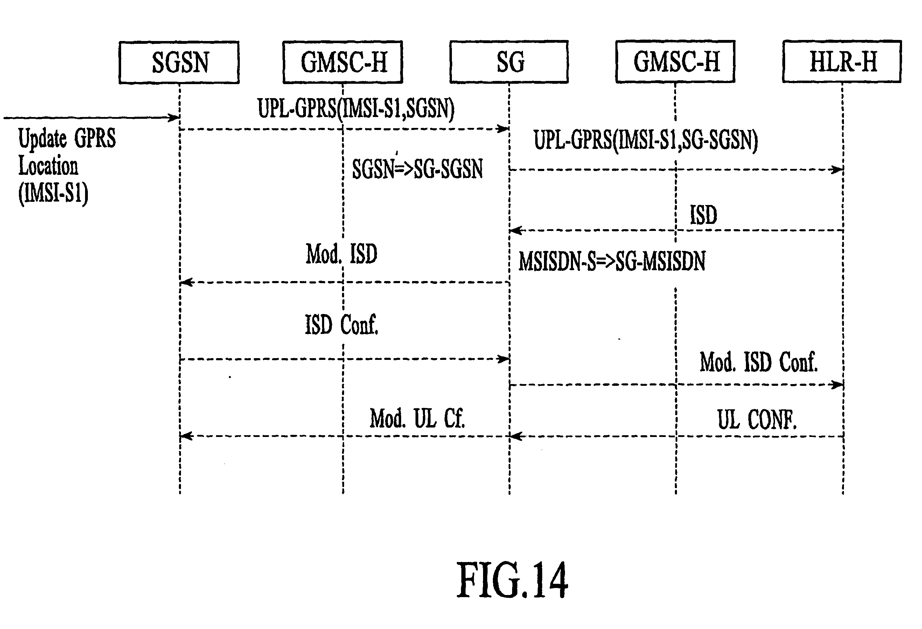

UpdateGPRSLocation is similar to UpdateLocation except that there is no need to worry about other SIMs, since network-initiated PDP is based on static IP. Here, SGSN is replaced by SG-SGSN-H or SG-SGSN-F depending on the SGSN network being in HPMN or roaming. The signaling trace is as shown in **Figure 14****.**

On successful GPRS location update of the current SIM, if the Current-GPRS-Location variable for IMSI-S is not empty, the value of the Current-GPRS-Location variable of IMSI-S becomes the value of the Previous-GPRS-Location variable, while the new SG-SGSN is the value of the Current-GPRS-Location variable of IMSI-S. If the Current-GPRS-Location variable for IMSI-S is empty, the value of the Current-GPRS-Location variable of IMSI-S is the new SG-SGSN:
IMSI: IMSI-S;
MSISDN: MSISDN-S;
Current-GPRS-Location: SG-SGSN; and
GPRS-Attached: true.

However unlike the case with UpdateLocation, Currently-Registered Boolean variable and Current-Location variable will not be affected.

### DETAILED SIGNAL FLOWS: CancelLoc and HLR TimeOut

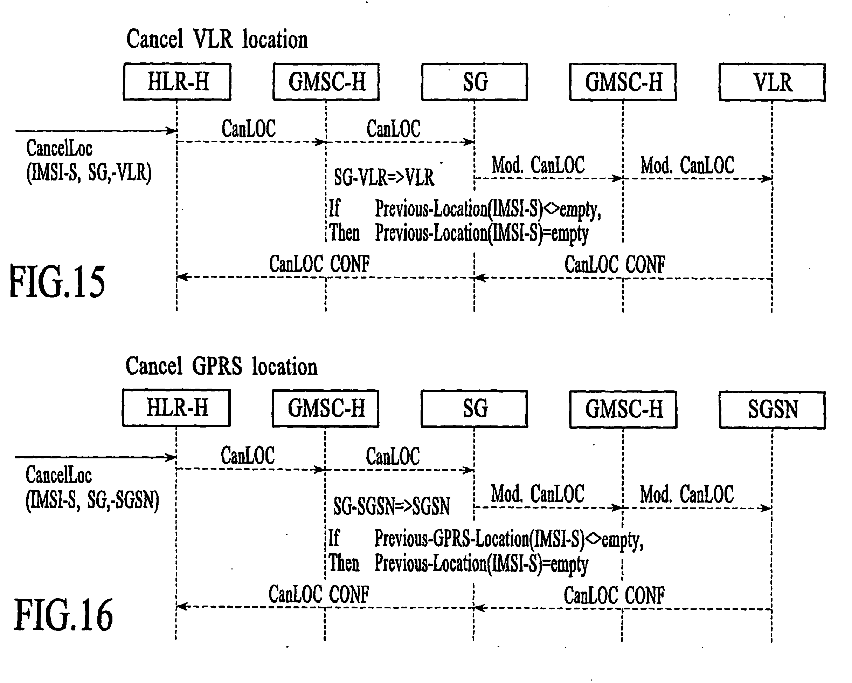

When HLR issues Cancel(IMSI-S,SG-VLR) to the Signaling Gateway, if SG-VLR is the Previous-Location of IMSI-S, it is relayed through the Signaling Gateway to VLR. Previous-Location of IMSI-S will be set to empty. If there is no previous IMSI-S location, then Cancel will be relayed through the gateway and the Currently-Registered Boolean for IMSI-S will be set to false. This is illustrated in **Figure 15****.**

Similar procedure applies for CancelLocation on GPRS as shown in **Figure 16****.**

When the Currently-Registered Boolean for IMSI-P is set to false (e.g. after the HLR time-out the IMSI-P entry), if there is any Current-Registered Boolean for IMSI-S (in the Related SIM record) set to true, then the Signaling Gateway also issues UpdateLoc(IMSI-P) except that the calling GT is SG-General and VMSC and VLR are all replaced by SG-general and Currently-Registered Boolean for IMSI-P is now set true.

When the Currently-Registered Boolean for IMSI-S is set to false, if only the Currently-Registered Boolean is true for IMSI-P (in the Related SIM record), and Current-Location variable of IMSI-P is SG-General, then the Signaling Gateway will issue Purge(IMSI-P) to HLR and set Currently-Registered Boolean to false for IMSI-P and Current-Location variable of IMSI-P is set to empty.

### DETAILED SIGNAL FLOWS: Authentication

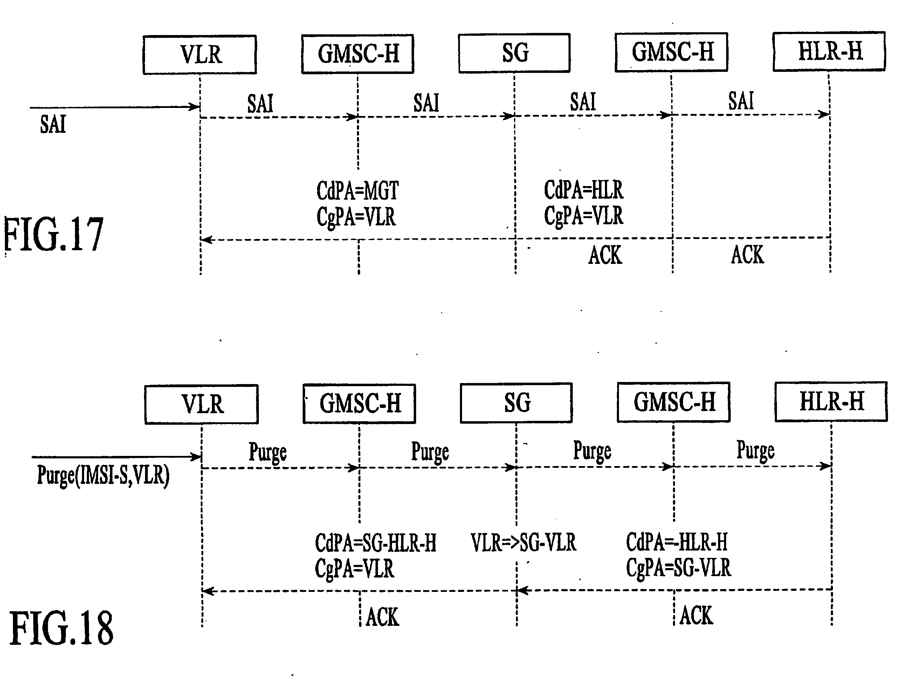

SendAuthenticationInformation (SAI), or SendParameters have CdPA=MGT-MIMM-IMSI. The message will be sent to the signal gateway function based on the GTT at the GMSC-H/STP-H. CgPA and CdPA are not modified. Since the SCCP configuration of the Signal Gateway function sets MGT-MIMM to HLR-H, the message is sent to HLR-H. Subsequent interactions will be between HLR and Calling GT directly. Individual SIMs can have their own security keys Ki and Kc. An authentication signaling trace is shown in **Figure 17****.**

### DETAILED SIGNAL FLOWS: PurgeMS and VLR TimeOut

If VLR issues a PurgeMS(IMSI-S) to SG-HLR-H, the SCCP routing is done on SG-HLR-H. The GTT function on SG-HLR-H redirects the message through the Signaling Gateway. The Signaling Gateway replaces the VLR by SG-VLR and relays the message on IMSI-S to HLR-H. A signaling trace for PurgeMS is shown in **Figure 18****.**

The Currently-Registered Boolean variable for IMSI-S is set to false and the Current-Location variable for IMSI-S is set to empty.

When the Currently-Registered Boolean for IMSI-P is set to false, if there is any Currently-Registered Boolean for IMSI-S set to true, then the Signaling Gateway also issues UpdateLoc(IMSI-P) except that the calling GT is SG-General and VMSC and VLR are all replaced by SG-General and Currently-Registered Boolean for IMSI-P is now set to true.

When the Currently-Registered Boolean for IMSI-S is set to false, if there is only the Currently-Registered Boolean true for IMSI-P and Current-Location variable of IMSI-P is SG-General, then the Signaling Gateway issues Purge(IMSI-P) to HLR and sets Currently-Registered Boolean to false for IMSI-P and Current-Location variable of IMSI-P is set to empty.

### DETAILED SIGNAL FLOWS: MO-call and MO-SMS and MO-GPRS

Any handset registered with the network proceeds normally without involving the Signaling Gateway. In particular, there can be simultaneous calls or data sessions with different handsets. CDR at VMSC/SGSN/GGSN distinguishes different SIMs/IMSIs.

If MSISDN-P is the same for all SIMs, then all VLRs will have the same MSISDN-P. Caller ID for calls and SMS is also the same.

### DETAILED SIGNAL FLOWS: MT-call and error handling

The MIMM subscribers can receive calls and SMS on any handset from any phone number. A MISM subscriber is just a special kind of MIMM subscriber who can receive calls and SMS on any handset from just one phone number - MSISDN-P.

When MSISDN-S is called, GMSC issues SRI(MSISDN-S) to HLR. If the subscriber is registered with the network with any of the handsets, HLR will issue PRN(IMSI-S, SG-X). If SG-X is SG-general, then it means the IMSI-S SIM is not registered. The Signaling Gateway goes through the currently registered SIMs in the order of the preference for voice calls for the number (note that this is generally different from the order of preference for MT SMS). The order of preference for voice calls could be the same for each MSISDN-S of the subscriber.

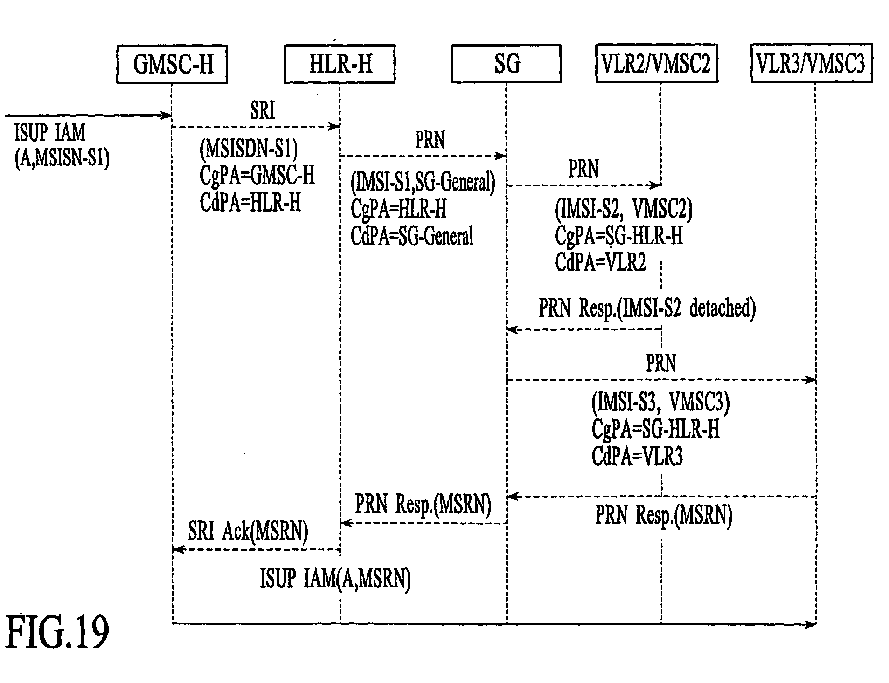

If the PRN request results in any error (e.g. IMSI-detached or roaming number is not available, etc.), the next element in the list of the preferences is selected to go through the same test. An example signaling trace is shown in **Figure 19****,** in which the preference order is to try the called MSISDN-S1's SIM/handset first, and if that is not available to try others. Since IMSI-S1 is not really registered because its location is SG-General, the Signaling Gateway looks through the registered handsets from the Related SIM Record of IMSI-S1. Since IMSI-S2 is IMSI-detached, the Signaling Gateway issues PRN on IMSI-S3 to return MSRN.

If Handset/SIM/IMSI-S is GPRS-attached, in selecting the currently registered SIM list those that are not GPRS attached are tried first, and if none succeeds, those with GPRS attached are tried next. This helps to avoid disrupting the GPRS session, or the subscriber's intention to activate a GPRS session.

For each registered SIM, the Signaling Gateway could also issue an SMS-ping (IMSI-S, VMSC) first to see if the SIM is available before issuing PRN, since PRN will not capture the case of "paging no response". "Available" means "not absent", where "absent" is defined as "paging no response", IMSI-S detached. If it is available, it will issue PRN(IMSI-S, VLR) to return the MSRN. If it is not available, the next element in the list of the preferences will be selected to go through the same test.

The SMS-ping is not required if mobile call hunting is deployed. Even if mobile call hunting is not deployed, this is an optional feature for the operator to deploy.

### DETAILED SIGNAL FLOWS: MT-SMS

The MIMM subscriber can receive SMS on any handset from any of his MSISDN-S numbers based on preference order per MSISDN-S or for all MSISDN-S of the subscriber. The MISM subscriber can receive SMS on any handset from the principle MSISDN-P, with only one order of preference for SMS. When a SMSC needs to deliver a SMS to MSISDN-S, the SMSC issues SRI-SM(MSISDN-S) to HLR. If the subscriber is registered with the network with any of the handsets, HLR will return SG-X. If the SMSC is a foreign SMSC, if the SG-X is a FPMN GT, then SMS-Relay product will intercept the SRI-SM query and returns the network node number to itself. Irrespective of what method used, in the end, the SMSC will MT forward the message FSMS(IMSI-S) through the Signaling Gateway with SG-X as the SCCP CdPA address.

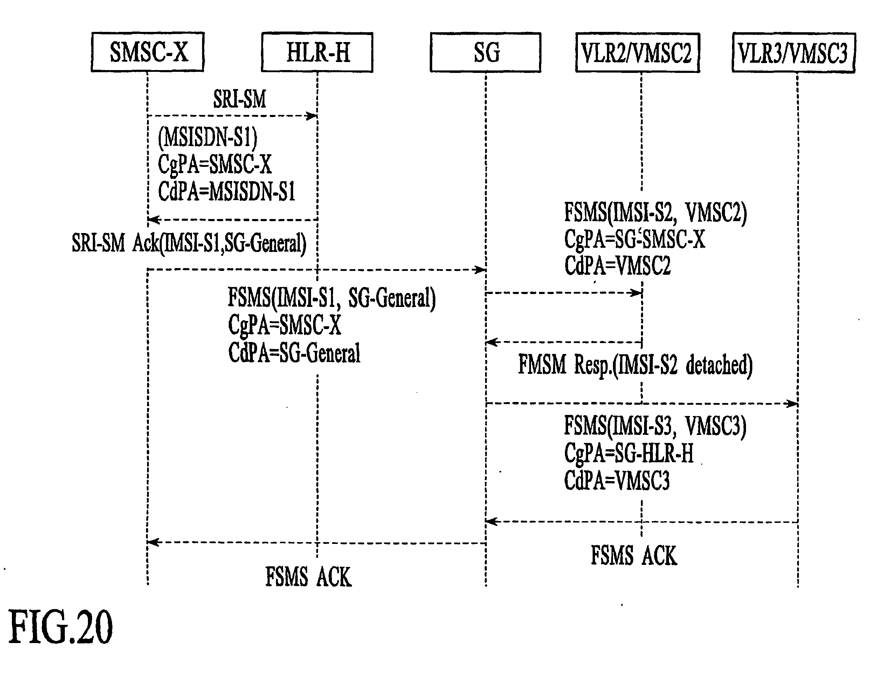

If SG-X is SG-general, the principle SIM associated with MSISDN-S is not really registered. The Signaling Gateway then goes through the currently registered SIMs in the order of preferences for SMS (note that this is usually different from the order for MT voice calls). For each selected SIM, it issues FSMS(IMSI-S, real-VMSC/SGSN). If an error is returned (e.g. absent subscriber, busy for MT SMS, delivery failure, SMS memory capacity is full, etc.), the next element in the preference list is selected to go through the same test. An example signaling trace for MT-SMS is shown in **Figure 20****.**

Although SMS delivery might be failed due to some errors (e.g. SMS memory capacity is full), other handsets might still be available. This means that when the failed handset clears some SMS space, ReadyForSMS might be sent to the Signaling Gateway. Since the SMS is really delivered, the message need not be propagated at all.

For this reason, a record-level Boolean variable SMS-Failed is defined for a Related SIM record. The SMS-Failed Boolean variable is not true for a Related SIM records; there is no need to propagate or relay the ReadyForSMS messages. On the other hand, if the SMS-Failed Boolean is true, then when a new handset registration goes through the Signaling Gateway. ReadyForSMS should be sent with AlertReason being Subscriber-Present, or MemoryCapacity-Available (even though the new handset might also have memory capacity full).

### DETAILED SIGNAL FLOWS: SMS re-delivery management

When SMSC-X is forwarding the SMS to SG-X with IMSI-S based on the response from SRI-SM on MSISDN-S, SMSC-X is expecting status from SG-X. The GTT function at GMSC-H/STP-H directs the message to the Signaling Gateway. The Signaling Gateway attempts to deliver the SMS to registered handsets in the order of preference for SMS.

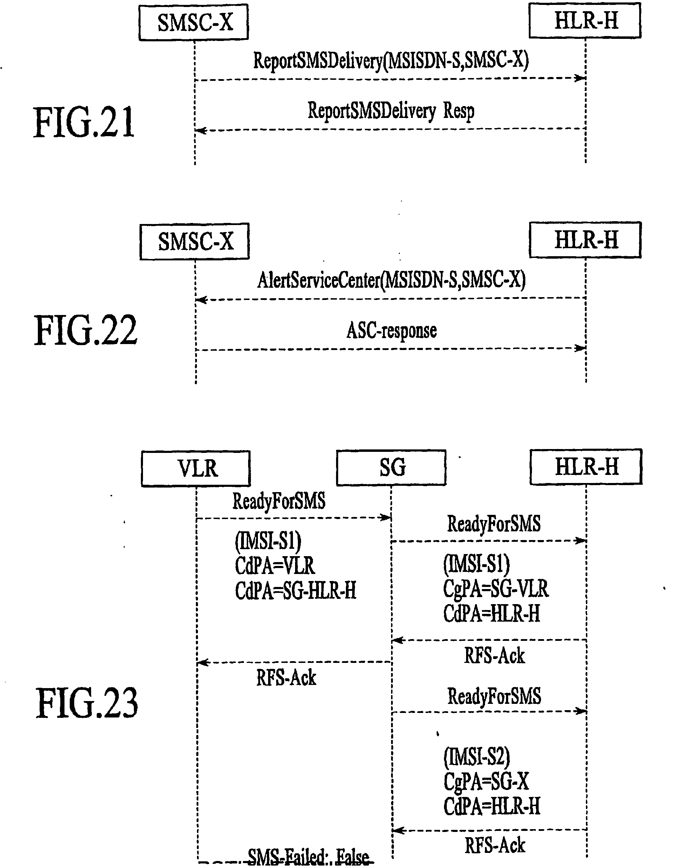

As the Signaling Gateway is going through the registered handsets for SMS delivery, if delivery to all handsets result in failure, the Signaling Gateway will only report the status of MSISDN-S to the SMSC-X. In return the SMSC-X will register the status with HLR-H that responded its SRI-SM query on MSISDN-S. In the case of MISM service, since there is only one MSISDN-P from a user perspective, ReportSMSDelivery will be sent to HLR-H on MSISDN-P. A signal trace for SMS-redelivery is shown in **Figure 21****.**

Subsequent interactions regarding Alert Service Center and Inform Service Center will be between the HLR-H and the SMSC-X directly. The signal gateway function may only be involved in SMS delivery or relay, as illustrated in **Figure 22****.**

### DETAILED SIGNAL FLOWS: Ready-for-SMS

Embodiments of the MIMM service allow the subscriber to receive SMS on any MSISDN-S, even though the IMSI-S associated with the MSISDN-S is not registered. Thus, SMSC-X should also be noted when other handsets/IMSI-S becomes available (e.g. present or memory capacity is available). This means Ready-For-SMS messages from any SIM/handset of a MIMM subscriber should also be propagated to other handsets/SIMs.

When a ReadyForSMS message on IMSI-S1 from VMSC is sent to the Signaling Gateway, if SMS-Failed is true for the Related SIM record of IMSI-S1, then the Signaling Gateway will also issue ReadyForSMS for all other IMSI-Ss in the Related SIM record of IMSI-S1 and set SMS-Failed to false afterwards. Otherwise, the message will not be relayed to the HLR of IMSI-S1.

One reason that the SMS-Failed Boolean variable is checked is because with MIMM/MISM service, a SMS delivery to a handset/SIM at a particular VMSC address might fail but the SMS could still be successfully delivered to the subscriber (on to his other registered handsets) at other VMSC addresses.

As mentioned with reference to UpdateLocation, ReadyForSMS is also issued by the Signaling Gateway for all other IMSIs of a Related SIM record when UpdateLocation is received by the Signaling Gateway on a new handset registration on IMSI-S. A signal flow for Ready-For-SMS is shown in **Figure 23****.**

### DETAILED SIGNAL FLOWS: SS and USSD services

Let SS denote a general Supplementary or USSD service MAP message. Table 6 provides a list of SS operations which operate on IMSI.

Depending on operator configuration and subscriber preferences, structured or unstructured supplementary services (e.g. call barring, FTN settings) can be applied to an individual SIM or across all SIMs. In the former case, when a SS message on the IMSI-S1 goes through the Signaling Gateway, the Signaling Gateway simply relays the message to HLR for the IMSI-S1. In the latter case, when a SS message is going through the Signaling Gateway with the IMSI-S1, the Signaling Gateway will relay the message to the HLR for each IMSI-S in the Related SIM record of IMSI-S1. In general, supplementary services will be applied to all IMSI-S of a Related SIM record, while USSD will only need be applied to the IMSI-S of the requesting handset. In the case of MISM, USSD request can be configured to direct the request to IMSI-P irrespective of the requesting handset's IMSI-S.

**TABLE 6**

| MAP Service | Reference Type | Use of the Parameter |
|---|---|---|
| MAP-REGISTER-SS | IMSI | Subscriber identity |
| MAP-ERASE-SS | IMSI | Subscriber identity |
| MAP-ACTIVATESS | IMSI | Subscriber identity |
| MAP-DEACTIVATE-SS | IMSI | Subscriber identity |
| MAP-INTERROGATE SS | IMSI | Subscriber identity |
| MAP-REGISTER-PASSWORD | IMSI | Subscriber identity |
| MAP-PROCESS-UNSTRUCTURED-SS-REQUEST | IMSI | Subscriber identity |
| MAP-UNSTRUCTURED-SS-REQUEST | IMSI | Subscriber identity |
| MAP-UNSTRUCTURED-SS-NOTIFY | IMSI | Subscriber identity |
| MAP-FORWARD-SHORT-MESSAGE | IMSI (NOTE) | Subscriber identity |
| MAP-REGISTER-CC-ENTRY | IMSI | Subscriber identity |
| MAP-ERASE-CC-ENTRY | IMSI | Subscriber identity |

| | | |
|---|---|---|
| NOTE: Only when the IMSI and the LMSI are received together from the HLR in the mobile terminated short message transfer | | |

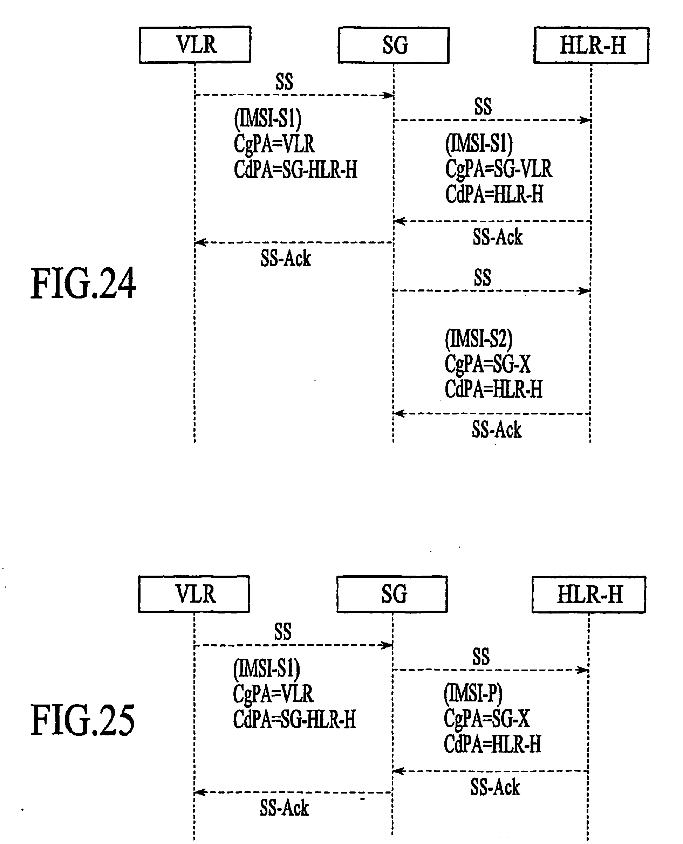

An example Signal Trace for supplementary services (SS) is shown in **Figure 24****.**

In the case of MISM, since there is a principle SIM with MSISDN-P and IMSI-P, all subscriber data can come from IMSI-P's HLR. SS operations therefore can be applied on IMSI-P. Since IMSI-P's location is not necessarily the location of IMSI-S1, the CgPA for relaying the SS operation assumes the SG location of IMSI-P, hence the notation of SG-X used in **Figure 25****,** which illustrates SS in the MISM case.

### DETAILED SIGNAL FLOWS: Stand-alone ISD

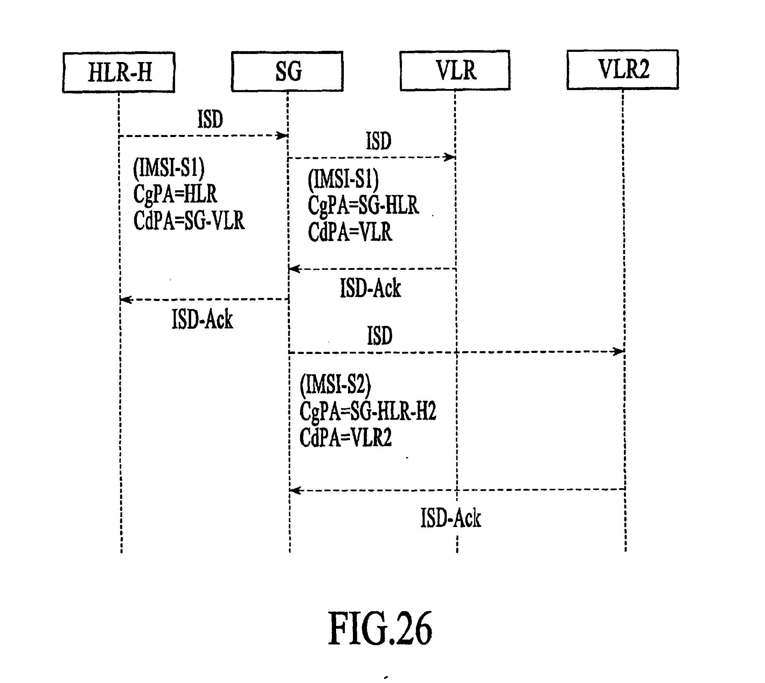

In the case of MISM, since there is a principle SIM with IMSI-P and MSISDN-P, any stand-alone ISD on IMSI-P is applied to all truly registered SIMs. In the case of MIMM, a stand-alone ISD on IMSI-S1 can be applied to all truly registered SIMs of a related SIM record of IMSI-1 on all data, or those cases where the subscribers or operators have set the data to be the same. For example, a subscriber might have set Operator Determined Barring, caller ID and FTN data to be the same for all IMSI-S. In this case, the Signaling Gateway itself issues standalone ISD to all truly registered IMSI-S of the Related SIM record of IMSI-S1 with modification of the same data, as illustrated in **Figure 26****.**

### DETAILED SIGNAL FLOWS: MMS

MMS is an application service. It rides on top of the data pipe, such as GPRS. The Signaling Gateway is not involved at all.

### DETAILED SIGNAL FLOWS: CAMEL

In MISM, different SIMs can have the same trigger profile on IMSI-P. In MIMM, different SIMs can have the same/different trigger profile for each SIM. In either case, since the Signaling Gateway does not modify the GSMSCF address of a trigger, CAP transactions on CSI do not involve the Signaling Gateway.

### ENHANCED MOBILE HUNTING FOR CALLS AND SMS: Enhanced Call Hunting Methods

Based on the preference order of handset for voice calls, the Signaling Gateway directs the call to the preferred registered handset. When the most preferred registered handset is not answering or busy or out of radio coverage, in the absence of call hunting, it will fall back to call forwarding to whatever values (e.g. voicemail) the subscriber sets it to. However a subscriber can forget a preferred handset at home, or leave the preferred handset on (e.g. at office) while away from the preferred handset and carrying another handset. When the preferred handset is not answering, a less preferred but reachable handset can be tried until such a handset answers or the search has been exhausted.

Technically this can also work for a "handset busy" case. That is, the call can be forwarded to another handset so to catch the subscriber's attention, or pass the following call onto another predetermined person. For example, if a subscriber is talking on the car phone but also has a normal phone on, when another call comes in, it is possible to first use call waiting. Failing call waiting, the call goes to the other phone, if available. This process repeats until all reachable handsets have been tried. There are several options for implementing a hunting group, including:
Call Forwarding;
ISUP loopback; and
IN.

The call forwarding approach does not require special switch changes/resources and IN features. However forwarding settings are changed and tromboning international legs may be introdueced for outbound roamers of the MIMM service. The call forwarding approach can be limited to HPMN only in order to avoid possible high charges associated with tromboning.

ISUP loopback and IN do not produce tromboning for outbound roamers of MIMM services. Both ISUP loopback and IN support optimal routing for late call forwarding. Both ISUP loopback and IN support call detail records if needed.

ISUP loopback does not require switch IN support but does require double ports to support the call.

The ISUP loopback approach can be combined with Call Forwarding, while the Call Forwarding approach is applied when the subscriber is not roaming; and the ISUP loopback approach is applied when the subscriber is roaming.

The IN method does not incur any switch port resources but requires IN support.

### ENHANCED MOBILE HUNTING FOR CALLS AND SMS: Enhanced Call Hunting Methods:Call Forwarding method

Since individual SIMs each have their own MSISDN, a hunting group can be created based on call forwarding. In this case, the Signaling Gateway dynamically constructs a forwarding chain based on the order of preference of calls and currently registered handsets/SIMs. The last forwarding condition is whatever the subscriber set for the IMSI-S of the MSISDN-S on which the call was initiated. In the case of MIMM, the different IMSIs can have their own FTNs or the same FTNs. In the case of MISM, there is only one FTP setting associated with IMSI-P or MSISDN-P.

Alternatively, the Signaling Gateway will fix the forwarding chain based on the order of preference of calls, except that the end of chain will be whatever the subscriber set for the IMSI-S of the MSISDN-S on which the call was initiated.

An advantage of the fixed forwarding method is that there is no need to constantly change the forwarding values, except at the time of preference change for voice calls. A possible disadvantage is that the unregistered handsets are also tried during hunting, although it does not affect the overall service since the unregistered handset is treated as unreachable and immediately causes forwarding to the next handset.

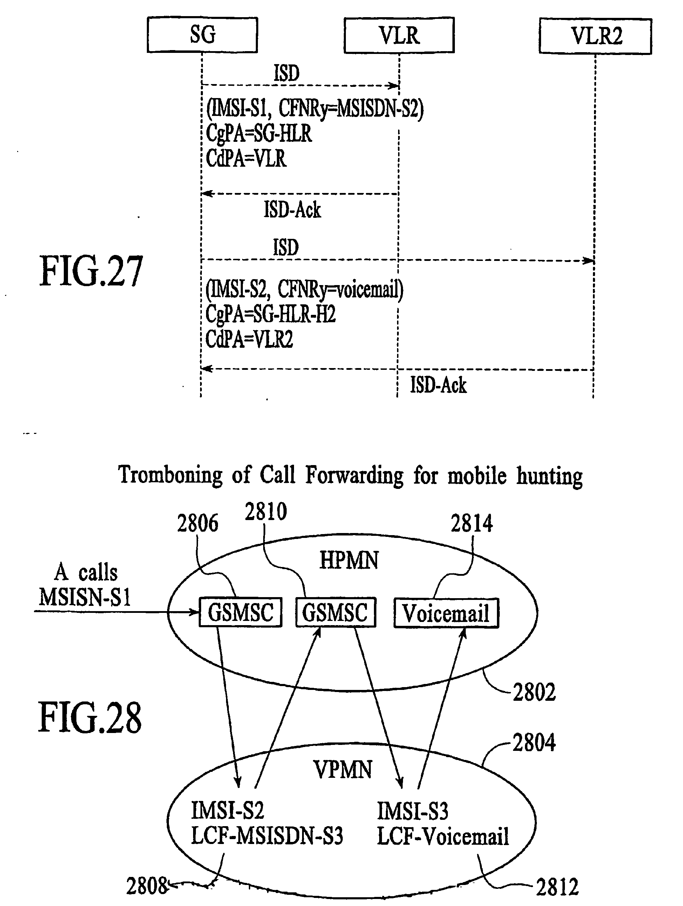

One advantage of the dynamic forwarding method is that only registered handsets are tried in turn. A possible disadvantage is that it requires constant change of forwarding values for each newly registered and deregistered handset. Considering signaling, the fixed method involves more signaling during the call hunting while the dynamic forwarding method involves more signaling upfront. An example signal trace for call forwarding is shown in **Figure 27****.**

Since a subscriber could have call waiting, in the case of a busy call the call will still be routed to the subscriber. If the subscriber is not answering, then "call forwarding on no-answer" will be triggered. The subscriber can set call forwarding preference and conditions. For example, a subscriber might not want to do CFB but only CFNRy and CFNRc. CFNRc is useful, because a subscriber might be out of radio coverage such that PRN might not be reachable. With Mobile call hunting, SMS pings to check handset reachability are not necessary.

The call forwarding approach has the potential disadvantage of tromboning for mobile hunting: For example, if two handsets/SIMs are both registered in outbound roaming, then the preferred handset is not answering, the call will be late call forwarded to the less preferred handset. The subscriber might end up paying several legs of international calls. This is illustrated in **Figure 28****.** An HPMN 2802 and a VPMN 2804 are shown. A call intended for MSISN-S1 arrives at GMSC 2806, which is in HPMN 2802. The call is forwarded to IMSI-S2 in VPMN 2804, then to GMSC 2810 in HPMN 2802, then to IMSI-S3 2812 in VPMN 2804, and finally to voicemail mailbox 2814 in HPMN 2802.

However, the call forwarding approach can be limited to HPMN only. Under this limitation, dynamic call forwarding is only done for registered handsets that are not roaming. For example, mobile hunting for customer care and tech support can be implemented with a call forwarding method.

### ENHANCED MOBILE HUNTING FOR CALLS AND SMS: Enhanced Call Hunting Methods: ISUP loopback method

In embodiments of this method, the value of any forwarding condition for mobile hunting (e.g. not answering, not reachable but excluding the busy condition) will not be sent to the VLR by the Signaling Gateway for any registered handset/SIM during location update.

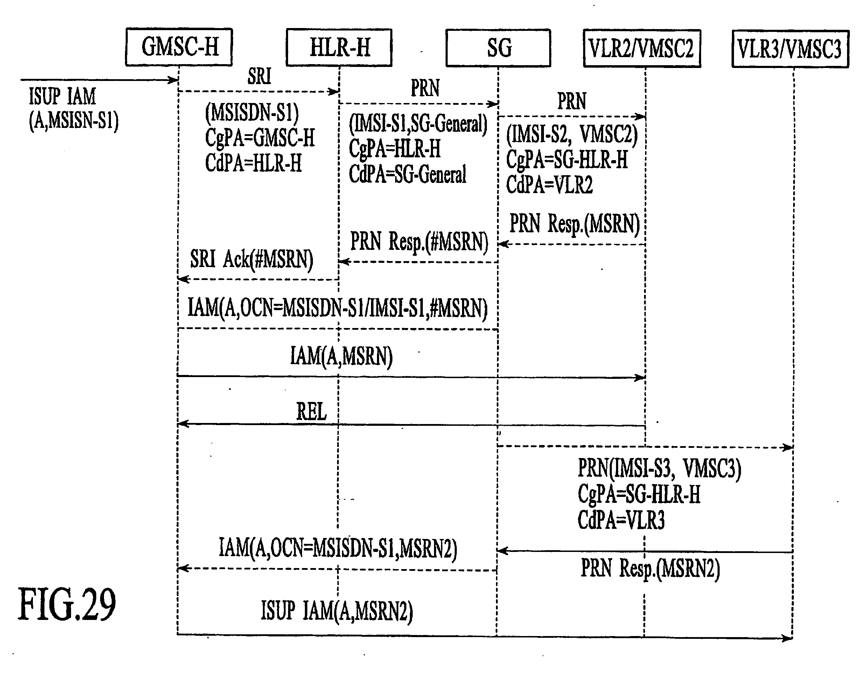

Anytime a PRN query is made by GMSC through HLR-H on IMSI-S to the Signaling Gateway for MT call, the Signaling Gateway returns #MSRN instead of MSRN. Here "#" is a logical notation for some prefix. The GMSC is configured with ISUP loopback on the prefix. An example signal trace for an embodiment of an ISUP loopback method is shown in **Figure 29****.**

### ENHANCED MOBILE HUNTING FOR CALLS AND SMS: Enhanced Call Hunting Methods: IN method

According to an embodiment of an IN method, the value of any forwarding condition for mobile hunting (e.g. not answering, not reachable but excluding the busy condition) will not be sent to the VLR by the Signaling Gateway for any registered handset/SIM during location update.

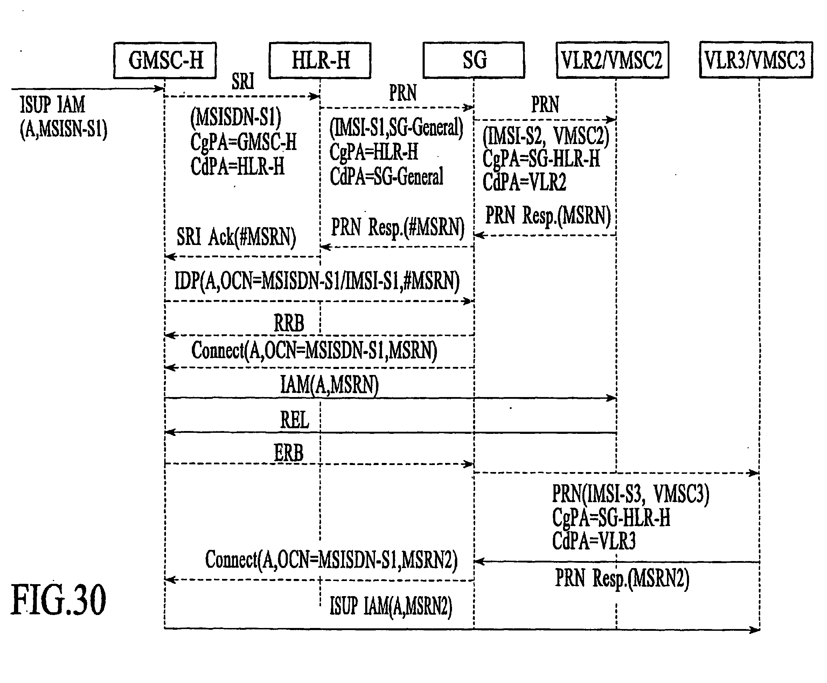

Any time a PRN query is made by GMSC through HLR-H on IMSI-S to the Signaling Gateway for MT call, the Signaling Gateway returns #MSRN instead of MSRN. Here, "#" is a logical notation for some prefix. The GMSC is configured with a trigger on this prefix to initiate an IDP transaction to a Signaling Gateway. An example signal trace for an IN method is shown in **Figure 30****.**

### ENHANCED MOBILE HUNTING FOR CALLS AND SMS: SMS Hunting and Flexible Alert

Since the Signaling Gateway tracks the status of each SMS delivery, any SMS failure such as absent subscriber due to IMSI-detach or radio out of coverage, SMS busy, memory capacity issue is captured through MT-SMS ACK by the Signaling Gateway. So SMS hunting is supported without additional feature enhancement.

However, the preferred handset may be left at home or in the office, while the less preferred handset is carried. In this situation, a MT SMS can be sent to all registered handsets. This is controlled by a record-level subscriber preference "MT-SMS-Preference: Broadcast".

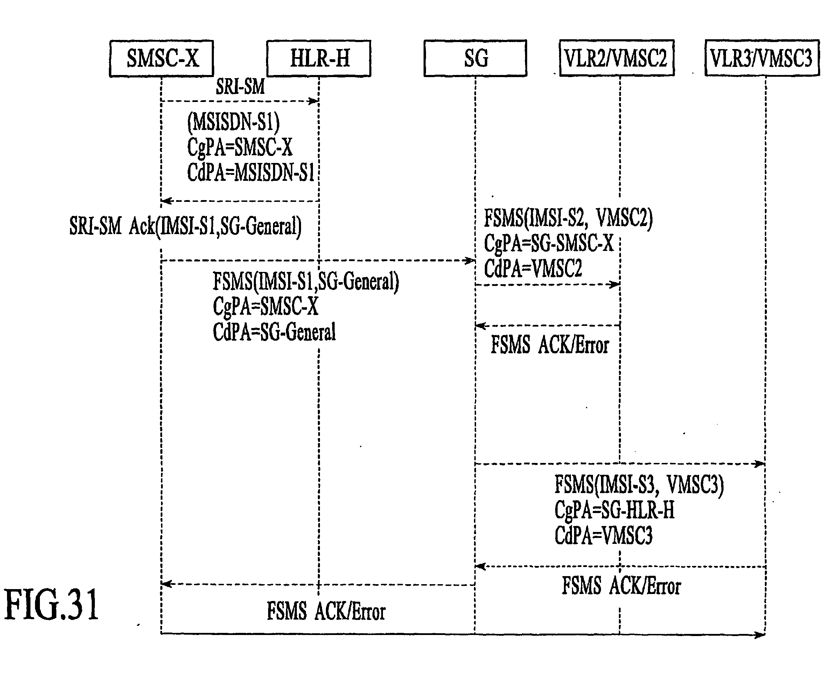

If the subscriber's preference is set to broadcast, when MT-SMS from SMSC-X is relayed through the Signaling Gateway, SG issues MT-SMS to the VMSC of each registered handset. An example signal trace for SMS hunting a flexible alert is shown in **Figure 31****.**

When the subscriber sets the MT SMS preference to broadcast, it is also possible to control what constitutes a broadcast success by a record level variable: "Broadcast-Success: All/Any/All-Registered". If the Broadcast-Success variable is set to "Any", then as long as delivery of the MT SMS to one handset is successful, the broadcast is considered to be successful.

If the Broadcast-Success is set to "All", then as long as delivery of the MT SMS to one handset in the Related SIM record is not possible, the broadcast is considered to be failed.

If the Broadcast-Success is set to "All-registered", then as long as delivery of the MT SMS to all registered handsets in the Related SIM record is successful, the broadcast is considered to be successful. When broadcast is failed, SMS-Failed will be set to true.

### OTA AND HANDSET SPECIFIC MESSAGING

Having separate (non-cloned) SIMs or IMSIs allows different configurations of handsets to be OTA-controlled since different handsets have different capabilities. This can be achieved by an OTA server directly interfacing with the Signaling Gateway. The Signaling Gateway recognizes the request coming from OTA. It will only try to send the message to the IMSI-S/MSISDN-S involved. The handset of the SIM IMSI-S/MSISDN-S must be reachable at the time of OTA; otherwise it will not be attempted or tried again.

Similarly, handset specific messaging can also be achieved by directly interfacing with the Signaling Gateway. For example, MMS messaging applications want to target MMS capable handsets only. So MMS alerts via SMS need only be sent to MMS capable handsets.

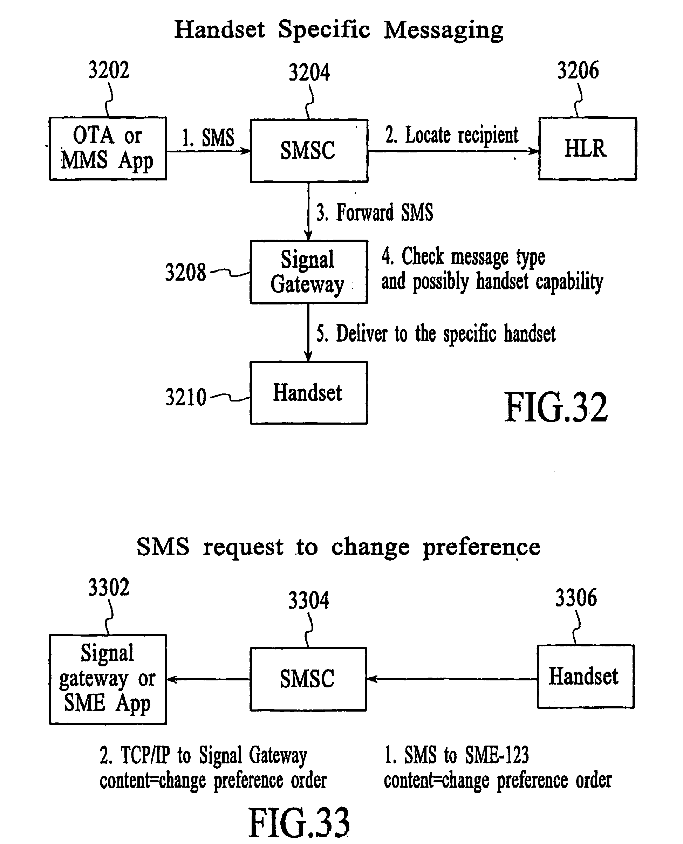

In either a MIMM service, or a MISM service, to target a particular handset, the application specifies either the IMSI-S or MSISDN-S of the SIM associated with the handset. Note that even with the MISM service where there is only one principle MSISDN-P from a user perspective, there is also a MSISDN-S associated with each SIM/IMSI-S. OTA applications must specify the specific MSISDN-S or IMSI-S for delivery of OTA messages. This handset specific messaging is illustrated in the block diagram of **Figure 32****.** An SMS is first sent via OTA server 3202 to an SMSC 3204, which locates the recipient using HLR 3206. The SMS is forwarded by the SMSC 3204 to the Signaling Gateway 3208, which delivers the SMS to the specific handset 3210.

If the SMS is received through the Signaling Gateway 3208 on any phone number (including MSISDN-P) via the direct interface to application, the Signaling Gateway 3208 only sends the message to the target handset/IMSI-S/MSISDN-S. Alternatively, an OTA server or SMS application can also interface with SMSC 3304 in a normal manner. However, this might require the Signaling Gateway 3208 to detect the message type, when typically the Signaling Gateway is concerned with MMS alert and OTA message types.

The MMS message itself rides on top of IP, and thus does not involve the Signaling Gateway. However MMS alert is sent to the MMS capable handset. The MMS application in the case of MISM often only knows the principle MSISDN-P. The Signaling Gateway 3208 must deduce that this is a MMS alert and send it out to only registered MMS capable handset.

To automatically forward the message to the right handsets or SIMs based on the handsets/SIMs handset capabilities, the subscriber associates a SIM with a handset, and then specifies the handset's capability. After the association, a MMS-Capable variable ("MMS-Capable: True/False/Empty") can be defined for each IMSI-S or handset (since there is an association) in the Related SIM record of a MIMM/MISM subscriber.

When the SMS is related through the Signaling Gateway, the message type (even if the content is encrypted, the message type can be found) is decoded. If the type is OTA/MMS, then the Signaling Gateway only sends the message to the target handset/IMSI-S/MSISDN-S.

An operator can also decide to affect all SIMs, or only a single SIM by using an web interface to configure the option. If the option for an IMSI-S is ALL, then all available handsets will get the OTA messages.

### OPERATOR AND SUBSCRIBER PROVISIONING INTERFACES

Operator Provisioning can be done via a HTTP interface with XML or Telnet commands. Operator Provisioning can also be done via web interface. The operator needs to provision the subscriber's Related SIM record DB to indicate which IMSI-S is the principle one for MISM service.

The web interface also allows subscribers to change orders of preferences for handsets (really SIMs) to receive calls and SMS. Subscribers can also define the association of a SIM with handset model for easy reference. Different security levels are applied for subscribers and operators.

Subscribers can also use other means to change preferences. These include USSD, SMS, Customer Care call etc.

Below is a description of USSD and SMS methods to change preference orders for a MISM service.

### OPERATOR AND SUBSCRIBER PROVISIONING INTERFACES: MO USSD and SMS request to change preference order

The default preference order for call hunting is to go with the last registered handset first before randomly choosing any other registered handset. The default preference for SMS hunting is broadcasting. These default preferences make the service more seamless.

This section describes how to explicitly change and define preferences according to an embodiment. Although the principle SIM is not changed, a subscriber can use any handset to issue USSD or MO-SMS to change the preference orders for calls and SMS. For USSD on IMSI-S, when relayed through the Signaling Gateway, the Signaling Gateway simply relays through to HLR. The message reaches HLR. HLR sends the request to the USSD gateway. The USSD gateway sends the USSD code to the Signaling Gateway (or a separate application,) which then changes the preferences accordingly. **Figure 33** is a block diagram illustrating an embodiment of an SMS request to change preferences. A handset 3306 sends an SMS to a SMSC 3304. The content of the SMS is a change preference order. The SMSC 3304 sends TCP/IP (with content change preference order) to the Signaling Gateway 3302, or alternatively, to an SME application.

Similar, MO-SMS can also be performed to change preference orders. In this case, the order does not go through the Signaling Gateway in the MO-SMS signaling. The order goes directly to the SMSC. The SMSC sends the message to the Signaling Gateway (or a separate application) via TCP/IP (e.g. SMPP) interface where the Signaling Gateway is viewed as a SME.

When a subscriber of the MISM services receive SIMs, they are labeled as 1,2,3, ..., N. To change the preferences, the subscriber can just list the SIMs in the order desired.

Preference order for voice calls is generally different from the preference order for SMS. For example, "car phone when on is preferred over mobile phone for voice call; while mobile phone is preferred over car phone for SMS". At the time of subscription, the operator's customer care representative can assign preferences beforehand, or there can be a default order.

Various means of change of preferences via USSD or SMS are listed below.

### By SMS:

The subscriber uses any phone to send a SMS to a SME address, say 123, denoting a preference change application. In the message, the subscriber enters the preference order, e.g. SMS 2 1 3 voice 1 2 3.

Separate SMS addresses can also be use for SMS preference and voice preference, e.g. 123 for SMS and 124 for voice. In this case, the message content is simply 2 I 3, or 1 2 3, respectively.

### By USSD:

The subscriber uses any phone to send a USSD command with a service code, say 123, denoting a preference change application. The USSD command structure is similar to **123*0*2*1*3*00*1*2*3#, where 0 indicates SMS, 00, and indicates voice call. Again, there can be different service codes for voice and SMS.

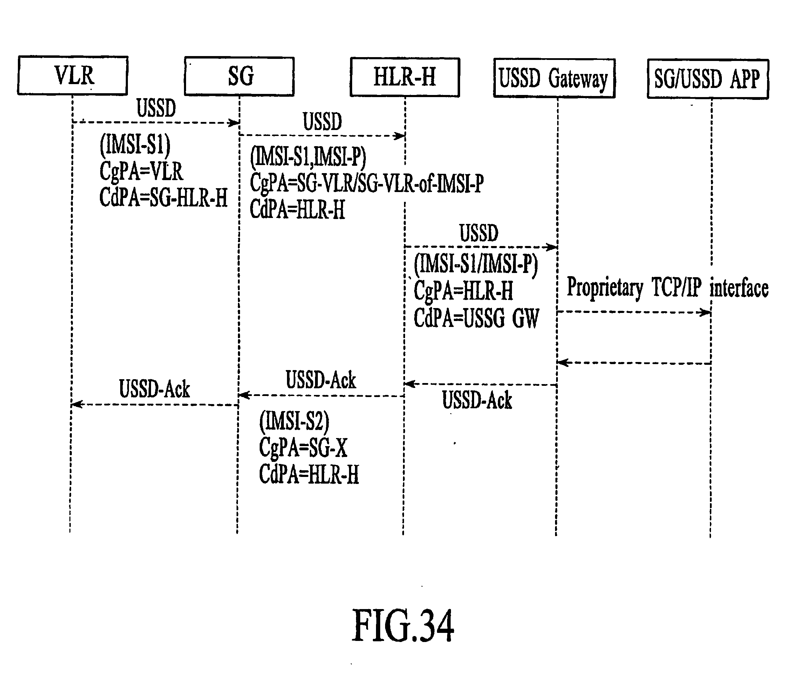

An example of changing preferences via USSD is shown in **Figure 34** after the handset sends the USSD command to the network VMSC, which then relays the message to VLR. Depending on operator configuration, the USSD request can be applied to the requesting handset/SIM/IMSI-S only or to the principle SIM/IMSI-P.

### ONE HANDSET ACTIVE AT A TIME (A VARIATION)

In the standard application, all handsets can be active on all subscriptions. In this variation, there can only be one active handset whose service will be enabled, although all handsets can be registered with the service.

When one disabled handset registers, it is not able to make or receive calls and SMS. To enable it, USSD commands are used. Once enabled, the Signal Gateway sends ISD to VLRs of all other registered handsets with call barring and SMS barring.

GPRS can also be restricted to allow only one handset active or multiple handsets.

### REGISTRATION VARIATION I

In the above registration process, each different IMSIs essentially gets its own profile from HLR, although profiles are supposed to be same for all IMSIs. While this is more generic, it could introduce synchronization of profiles across all these IMSIs of a MISM subscriber.

In this variation, all IMSIs get profile data from a single IMSI profile, the IMSI-P.

### REGISTRATION VARIATION II

In this variation, the IN-based call hunting option is basically followed within the MISM method as described above except that MSISDN-S is not changed to MSISDN-P in the VLR/SGSN when IMSI-S is registering as a VLR/SGSN at HPMN. This is the case whether a single profile or multiple profiles are or not in the location update of MISM subscribers. However, for VPMN registration by IMSI-S, the standard MISM approach applies. That is, MSISDN-P is sent to VLR at VPMN, since IN trigger cannot be sent to VPMN unless Camel is used in HPMN and supported at the VPMN.

This variation may be useful in operator environments where it is especially desirable to have an individual MSISDN associated with an IMSI present in the VLR/SGSN the IMSI is registered on. This may be true for reasons of tracing and CALEA services. For example, CALEA might ask any HPMN VLR/SGSN to report on activity of a particular MSISDN. Of course, it is technically possible to do that on IMSI too, but that requires significant interface changes since many OMAP and CALEA operations operate on MSISDN rather than IMSI.

For MT calls on MSISDN-P for the IN-based call hunting option, no terminating, forwarding or originating IN trigger is defined in the HLR. Instead, when HLR asks for MSRN through the MISM Signaling Gateway, the Signaling Gateway always returns a prefixed MSRN such that the prefix will cause an IN DP3 trigger from GMSC to the Signaling Gateway. The Signaling Gateway can then redirect the GMSC to connect to the real MSRN after it informs the GMSC to pass the control back to the gateway should the handset be unavailable.

In this way, call control is always maintained at the Signaling Gateway. It allows the MISM Signaling Gateway to hunt for any registered handset in a particular order until it is answered or forwarded to a FTN (e.g. voicemail). The approach does not hunt for handsets that are powered-off. For handsets that are out of coverage, "busy" or "no answer", call controls are returned back to the MISM Signaling Gateway to initiate calls to other registered handsets so that late call forwarding is not tromboned, but rather more efficiently forwarded to the other registered handsets.

For MO-calls, under the standard approach, since VLR/SGSN of IMSI-S also has MSISDN-P, no special efforts need be made. Caller ID will always be MSISDN-P. However under the revised approach, because MSISDN-S is not changed at the VLR/SGSN of IMSI-S registration, the subscriber's class mark will indicate an IN-trigger into the MISM Signaling Gateway. The Signaling Gateway then modifies the calling party to be MSISDN-P. It can also produce CDR if required.

HLR in this case defines a class mark or service set for MISM subscribers to trigger IN to the Signaling Gateway. This approach works only in a local case, in general. The roaming case will be ignored since caller ID might not be delivered anyway.

For MT SMS, the standard MISM approach described above is followed, except the SMS broadcasting option is used.

For MO-SMS, like MO-call, HLR in this case defines a class mark for MISM subscribers to trigger IN to the Signaling Gateway. This approach works only in a local case, in general. The roaming case will be ignored since Camel 3 is not generally supported, even in a Camel capable VPMN. When IMSI-S is sending a SMS, the IN trigger at VMSC/VLR/SGSN sends the control to the MISM Signaling Gateway. The Signaling Gateway modifies the sender number MSISDN-S to MSISDN-P, and can also generate CDR if required.

For Camel 1 and 2 VPMN networks, the camel trigger can be used to change MSISDN-S to MSISDN-P for MO-calls. It will also allow caller ID to be delivered if calling a HPMN number. However, this is outside the scope of this delivery. For Camel 3 VPMN networks, MO-SMS can be changed to have a common MSISDN-P.

For this delivery, when IMSI-S is registering at VPMN, it follows the standard approach where MSISDN-P will be sent to VLR.

For Mobile initiated or network initiated GPRS, no MISM Signaling Gateway is involved. No IN trigger needs to be defined at SGSN for GPRS.

For MT SMS (e.g. OTA configuration) and MT-calls (e.g. call tracing) on MSISDN-S, only the IMSI-S handset will receive it. That is, no call hunting or SMS broadcasting is applied. For MT SMS (e.g. OTA configuration) and MT-calls (e.g. call tracing) on MSISDN-P only, either all the other handsets are turned off, or the no-hunting or broadcasting option is set via USSD or customer care.

### REGISTRATION VARIATION II: Signaling Flow: MO-Calls

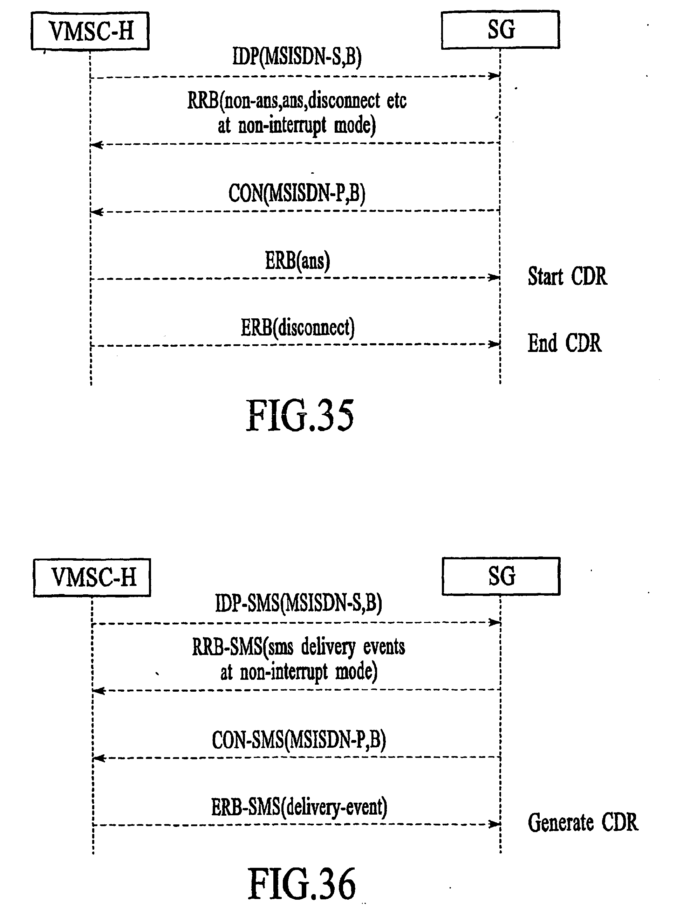

For MO-calls, VMSC-H is equipped with a DP2 trigger downloaded to VLR-H from HLR-H. This is illustrated in **Figure 35****.**

### REGISTRATION VARIATION II: Signaling Flow: MO-SMS

For MO-SMS, VMSC-H is equipped with a DP2 trigger downloaded to VLR-H from HLR-H. This is illustrated in **Figure 36****.**

### REGISTRATION VARIATION II: Comparison of Variation II with "Standard" Method

One advantage of the variation is that the VLR/SGSN in HPMN that IMSI-S is registering will have MSISDN-S in it. This makes it operationally simple to trace a particular handset's or SIM's activity via MSISDN-S. It also makes CDR checking easier. It further allows the MISM gateway to know which handset is calling a particular number. For some countries, CALEA regulation might also require VLR/SGSN to have the original MSISDN-S correspond to the registered IMSI-S. This is not applicable to roaming, in which the MSISDN-P is always sent to VLR in VPMN.

There are some possible drawbacks of the variation for some applications. For example, while tracing a particular handset is easier in the variation, tracing a subscriber's activity is more difficult. In the standard MISM IN variation, a Law Enforcement Agency merely specifies MSISDN-P to trace all activities associated with the subscriber. In the M1 specification variation though, tracking would need to be specified on all MSISDNs. For this reason, the standard MISM IN implementation is recommended for M1, since it requires minimal additional development efforts, and it is more flexible. To trace individual handsets, however, IMSI is used in the standard MISM IN implementation.

Another possible drawback to the variation is that, for MO calls and SMS, IN triggers are required. MO-SMS trigger might not be possible in many operators' IN environments. Fortunately, M1 has both triggers.

Another possible drawback to the variation occurs with MMS over GPRS. Since SGSN still has the MSISDN-S to set up PDP context, if MMSC performs access checks on the MMS message for MSISDN-P, then the variation might have a problem accessing the MMS message for MSISDN-P, since this is the single number the outside world is dealing with. On the other handset, if MMSC also verifies on IMSI on the MMSC message for MSISDN-P, an IMSI-S handset will not be able to access the MMS message for MSISDN-P either.

### MISCELLANEOUS INTERFACES: Number Portability Considerations

The number portability domain considered here is within a country. Subscribers who port out a MIMM service number to another operator will no longer have access to the MIMM service. Since the ported-out MSISDN will then be associated with the IMSI of another operator, the MGT-S based routing will not be received at HPMN. However, the HPMN GMSC still performs Number Portability lookup and routing of calls to the PMN currently serving the ported-out MSISDN.

Subscribers can be allowed to port-in their existing numbers from other operators in the country of the HPMN. This is possible since the IMSI-S of these numbers can be dynamically associated and still remain within HPMN.

For signaling messages (Update Location, for example) routed on MGT for this subscriber, since the IMSI-S belongs to HPMN, the messages will get routed to HPMN. The ported-in MSISDN will be returned in the Insert Subscriber Data message and substituted with MSISDN-P (could be the same as the ported-in MSISDN). For signaling messages routed on MSISDN-S (when not routed via the Signaling Gateway), the HPMN GMSC will handle them normally.

### MISCELLANEOUS INTERFACES: Location-base services

MIMM service should not affect subscribers' normal (roaming) location-based services (if any).

Location-based services consist of SMLC and GMLC. SMLC is similar to a VLR/VMSC, while GMLC is similar to a GMSC. SMLC determines the positioning method and determines the position of a MS based on MS's measurements of LMUs. These location measurement units are to SMLC like a VMSC to VLRs. GMLC provides a location interface for LCS (location service) clients to request location information about a targeted MS.

SRI-LCS is a MAP message between GMLC and HLR. It operates on IMSI or MSISDN to locate the VMSC to request location information of a MS.

PSL (Provide Subscriber Location) is a MAP message between GMLC and VMSC to request location information of a target MS. It operates on IMSI or MSISDN. When the MIMM subscriber is registered in VPMN or with IMSI-S1, the VMSC to GMLC is the Signaling Gateway itself.

The SRI-LCS and PSL are analogous to SRI and PRN for call services.

However there is no analogy for SLR (Subscriber Location Report) service which arises when a request for location is either implicitly administered or made at some earlier time by PSL.

### MISCELLANEOUS INTERFACES: Compliance

The Signaling Gateway complies with the following specifications:
3GPP TS 09.02 v7.7 R1999/3GPP TS29.002;
Q711-716 SCCP;
Q761-764 Q767;
3GPP TS 23.003 V3.9.0 (2001-06);
GSM 03.60 version 6.6.1 Release 1997;
GSM 03.90 version 7.0.0 Release 1998;
GSM 03.40 version 7.4.0 Release 1998/3GPP TS 03.40 V7.5.0 (2001-12);
GSM 03.18 version 6.6.0 Release 1997/3GPP TS 23.018 V3.10.0 (2002-01); and OFTA spec 2202/2204.

The Signaling Gateway handles the mapping between MSISDN-H stored in HPMN HLR and MSISDN-F stored in the signal gateway function. There are data services (e.g., circuit switch, HSCSD, GPRS) with which MSISDN may not be involved. And there are SS and USSD services which reach HPMN real HLR according to IMSI. In all these situations, the signal gateway function either: 1) relays to the real destinations at the first interaction (subsequent interactions will be directly between the two parties without further participation from the Signaling Gateway); or 2. maps to the real destination by initiating a new transaction, and subsequent iterations go through the signal gateway function. For example, all the following procedures shown in Table 7 are handled by the Signaling Gateway.

**TABLE 7**

| **Message** |
|---|
| MAP_Send_Routing_Info_For_SM request |
| MAP_Send_Routing_Info_For_SM response |
| MAP_Forward_Short_Message MO-request |
| MAP_Forward_Short_Message MO-response |
| MAP_Forward_Short_Message MT-request |
| MAP_Forward_Short_Message MT-response |
| MAP_Report_SM_Delivery_Status request |
| MAP_Report_SM_Delivery_Status response |
| MAP Ready For SM request |
| MAP_Ready For SM response |
| MAP Alert Service_Centre request |
| MAP Alert Service Centre response |
| MAP_Activate_Trace_Mode request |
| MAP Activate Trace Mode response |
| MAP_Deactivate_Trace_Mode request |
| MAP_Dectivate_Trace_Mode response |
| MAP_Purge_MS request |
| MAP_Purge_MS response |
| MAP_Send_Authentication_Info request |
| MAP_Send_Authentication_Info response |
| MAP_Delete_Subscriber_Data request |
| MAP_Delete_Subscriber_Data response |
| MAP_Register_SS request |
| MAP_Register_SS response |
| MAP_Activate_SS request |
| MAP_Activate_SS response |
| MAP_Deactivate_SS request |
| MAP_Deactivate_SS response |
| MAP_Interrogate_SS request |
| MAP_Interrogate_SS response |
| MAP_Purge_MS request |
| MAP_Purge_MS response |
| MAP-Reset request |
| MAP-Restore request |
| MAP-Restore response |
| MAP-Forward-SS Check indication |
| MAP-UpdateGPRSLocation |
| MAP-Register-CC entry |
| MAP-Erase-CC entry |
| MAP-processUSSDrequest |
| MAP-UssdRequest |
| MAP-SSInvokeNotify |
| etc |

In summary, no MAP messages going through the Signaling Gateway will be affected by the Signaling Gateway for the normal services.

### LOGGING AND REPORTS

Embodiments of the Signaling Gateway system and methods described herein have a logging function in real-time on SS7 transaction history, roamer history, provisioning transactions etc. Each can be turned on/off based on configuration options.

The Signaling Gateway system generates the following reports:
Related SIM records of IMSI-S, MSISDN-S and other subscriber data configured in system;
Number of SS7 messages handled with details on individual message statistics (number of Update Location, Insert Subscriber Data, SRI, SRI-SM etc);
Traffic report such as Call traffic and signaling message traffic;
Current number of MAP/INAP/ISUP transactions. Total number of these transactions in a hour;
SMS sent and success/failure statistics;
Number of handsets registered per subscriber; and
SMS sent and Calls made on one MSISDN/SIM but received on another handset/SIM.

The reports can be conducted daily, weekly and monthly. Customized reports can be built based on customer requirements.

For generating a monthly report, the Signaling Gateway processes the daily log files rather than holding the one-month data in the DB. Daily statistics are saved to calculate monthly statistics.

Transactional history data (such as MAP/INAP/IUSP transactions) is logged in separate disk drive from CDR data to improve drive-write performance even though both sets of data could be mirrored in each of the drives.

The MIMM/MISM system described herein includes a mobile communication method for a mobile communications network operator to provide a multiple international mobile subscriber identities (IMSIs) service to one or more subscribers, comprising at least one of: the operator designating a set of subscriber identity modules (SIMs) for a subscriber, wherein the set of SIMs is registered to the subscriber; and wherein the set of SIMs comprises multiple SIMs, each of which is useable in one or more mobile communication devices, and each of which comprises a different IMSI; and configuring the set of SIMs and the network such that the subscriber presents a uniform appearance to entities communicating with the subscriber regardless of the SIM of the set of SIMs used for the communication, wherein the subscriber can simultaneously carry on a voice call on one SIM and carry on a data session on another SIM.

The method of an embodiment includes further configuring the set of SIMs and the network such that the subscriber can configure the SIMs in the set of SIMs to have different assigned behaviors.

The method of an embodiment further comprises configuring the set of SIMs and the network to facilitate the subscriber configuring a plurality of subscriber-configurable features, including call forwarding, call hunting, SMS forwarding, and SMS hunting. The subscriber of an embodiment configures the set of SIMs to have different assigned behaviors includes configuring order preferences, and wherein order preferences comprise: a call forwarding order among the SIMs, a call hunting order among the SIMs, a SMS forwarding order among the SIMS, and a SMS hunting order among the SIMs. The subscriber of an embodiment can change a configuration of the subscriber-configurable features at any time; and wherein the subscriber can change the configuration using one or more of USSD, SMS, IVR, and a web interface. The method of an embodiment further comprises preparing a single phone bill for the subscriber wherein usage of each of the SIMs in the set is represented separately.

The method of an embodiment further comprises the operator designating a set of subscriber identity modules (SIMs) for a group of subscribers, wherein each subscriber shares a subscription, and wherein each subscriber in the group has a different mobile subscriber ISDN number (MSISDN). The method of an embodiment further comprises configuring a voicemail mailbox as a last number in a call forwarding order preference. The order preferences of an embodiment are the same for all MSISDNs. The order preferences of an embodiment are different for each MSISDN.

The call hunting of an embodiment further comprises using a call forwarding method. The method of an embodiment further comprises dynamically creating a forwarding chain based on a current subscriber-configurable order preference. The method of an embodiment further comprises fixing a forwarding chain based on a particular instance of a subscriber-configurable order preference. A last forwarding condition identification (ID) of an embodiment is set by the subscriber for an IMSI of the MSISDN on which the call being hunted was initiated. The different IMSIs of an embodiment have different FTNs. In an embodiment, one FTP setting is associated with a single MSISDN that is associated with the service.

The call hunting of an embodiment comprises using a ISUP loopback method. In an embodiment, a PRN query is made by GMSC through HLR-H on IMSI-S to the operator for MT calls, and the operator returns #MSRN instead, wherein "#" is a logical notation for a prefix, and the GMSC is configured for ISUP loopback on the prefix.

The call hunting of an embodiment comprises using a IN method. A PRN query is made in an embodiment by GSMC through HLR-H on IMSI-S to the operator for MT calls, and the operator returns #, wherein "#" is a logical notation for a prefix, and the GMSC is configured with a trigger on the prefix to inititate an IDP transaction to the operator.

The SMS hunting of an embodiment comprises SMS broadcast with the set of SIMs.

All of the SIMs in the set of SIMs have the service enabled in an embodiment.

Only one SIM of the set of SIMs has the service enabled in an embodiment.

In an embodiment, each SIM of the set of SIMs has its own phone number.

The method of an embodiment further comprises the operator configuring the set of SIMs using an over-the-air (OTA) interface. The method of an embodiment further comprises the operator specifying a SIM to receive an OTA message by targeting an MSISDN. The method of an embodiment further comprises the operator specifying a SIM to receive an OTA message by targeting an IMSI.

All of the SIMs in the set of SIMs of an embodiment share a voicemail mailbox.

Multiple MSISDNs of an embodiment are associated with different IMSIs in the set of SIMs. The subscriber of an embodiment can configure any phone number as caller ID at any time. A default caller ID of an embodiment is an MSISDN associated with an IMSI of the SIM used when a call is made.

The set of SIMs of an embodiment includes a principle SIM with an MSISDN that is a single MSISDN for the service that is used as a caller ID and a called/received number from a perspective of the subscriber, wherein the MSISDN is associated with multiple IMSIs in the set of SIMs. The method of an embodiment further comprises designating IMSIs of the SIMs in the set of SIMs to be in a particular range. All SIMs in the set of SIMs of an embodiment present a common caller ID in MO calls and SMSs to the outside world for local calls and roaming calls. Single or multiple profiles of an embodiment are supported among the set of SIMs. A number of an embodiment originally called is identified regardless of which of the SIMs in the set of SIMs answers a call. A number of an embodiment originally SMSed is identified regardless of which of the SIMs in the set of SIMs answers an SMS call. The method of an embodiment comprises SMS broadcasting among the set of SIMs. The SIMs in the set of SIMs of an embodiment share one voicemail mailbox. In an embodiment, MT call and MT SMSs can be targeted to an individual SIM of the set of SIMs. Simultaneous actions can be allowed and disallowed in an embodiment for multiple SIMs, including multiple local calls, multiple roaming calls, some local calls, and some roaming calls Billing actions can be applied to all SIMs in a set of SIMs in an embodiment.

The GSM system described herein includes a signaling gateway system for a mobile communication network, the system comprising at least one of: at least one signaling gateway configured to operate as a SCCP node and a service node, and futher configured to host a MIMM/MISM application of a network operator; and at least one GMSC/STP coupled to the at least one signaling, wherein the GMSC/STP is configured in its GTT function to route MAP messages on subscribers to the MIMM/MISM through the at least one signaling gateway; wherein the MIMM/MISM application includes, at least one of, designating a set of subscriber identity modules (SIMs) for a subscriber, wherein the set of SIMs is registered to the subscriber; and wherein the set of SIMs comprises multiple SIMs, each of which is useable in one or more mobile communication devices, and each of which comprises a different IMSI; and configuring the set of SIMs and the network such that the subscriber presents a uniform appearance to entities communicating with the subscriber regardless of the SIM of the set of SIMs used for the communication, wherein the subscriber can simultaneously carry on a voice call on one SIM and carry on a data session on another SIM.

At least one GMSC/STP of an embodiment is coupled to the at least one signaling gateway via SS7 node.

The signaling gateway system of an embodiment includes at least one signaling gateway comprising at least one of a HLR, a VLR, a SMSC, a VMSC, and a GMSC. The signaling gateway of an embodiment further comprises a memory that stores subscriber registration states, and signaling gateway GT mapping to network elements of the operator's network. The signaling gateway of an embodiment further comprises a watchdog process that oversees the state of processes on the at least one signaling gateway. The signaling gateway of an embodiment further comprises a SNMP agent and a MIB. The signaling gateway of an embodiment further comprises a SCCP GTT interface. The signaling gateway of an embodiment further comprises a MTP3 routing table The signaling gateway of an embodiment further comprises OA interface and a MP interface for allowing the operator to provision subscribers and perform maintenance functions. The signaling gateway of an embodiment includes multiple signaling gateways each cross-connected to the at least one GMSC/STP of HPMN over E1/T1.

All signaling gateways of an embodiment have a same signal point code (SPC0) and a same global title (GT0).

Each signaling gateway of an embodiment is assigned an identical pool of GTs created by appending characters to a common GT (GT0).

The signaling gateway system of an embodiment further comprises a GT-H version and a GT-F version of GT0, wherein GT-H impersonates the signaling gateway as a HPMN network element.

A GGT function of the at least one GMSC/STP of an embodiment translates GTT prefixes to a destination point code of the at least one signaling gateway.

A GGT function of the at least one GMSC/STP of an embodiment translates a MGT (E-214 address) range from the special IMSI range of the subscriber to a common SPC(0) of the at least one signaling gateway.

Upon failure of at least one signaling gateway of an embodiment, subscribers revert to normal subscribers with multiple SIMs and multiple MSISDNs.

The MIMM/MISM system described herein includes a computer readable medium having instructions store thereon, which when executed in a mobile communication system, cause the mobile communication system to at least one of: designate a set of subscriber identity modules (SIMs) for a subscriber, wherein the set of SIMs is registered to the subscriber; and wherein the set of SIMs comprises multiple SIMs, each of which is useable in one or more mobile communication devices, and each of which comprises a different IMSI; configure the set of SIMs and the network such that the subscriber presents a uniform appearance to entities communicating with the subscriber regardless of the SIM of the set of SIMs used for the communication, wherein the subscriber can simultaneously carry on a voice call on one SIM and carry on a data session on another SIM.

The instructions of an embodiment, when executed in a mobile communication system, further cause the mobile communication system to configure the set of SIMs and the network such that the subscriber can configure the SIMs in the set of SIMs to have different assigned behaviors.

The instructions of an embodiment, when executed in a mobile communication system, further cause the mobile communication system to configure the set of SIMs and the network to facilitate the subscriber configuring a plurality of subscriber-configurable features, including call forwarding, call hunting, SMS forwarding, and SMS hunting.

The subscriber-configurable features of an embodiment further include order preferences, and order preferences comprise at least one of a call forwarding order among the SIMs, a call hunting order among the SIMs, and a SMS forwarding order among the SIMS, and a SMS hunting order among the SIMs.

The subscriber can change a configuration of the subscriber-configurable features of an embodiment at any time; and the subscriber can change the configuration using one or more of USSD, SMS, IVP, and a web interface.

The instructions of an embodiment, when executed in a mobile communication system, further cause the mobile communication system to prepare a single phone bill for the subscriber wherein usage of each of the SIMs in the set is represented separately.

The instructions of an embodiment, when executed in a mobile communication system, further cause the mobile communication system to designate a set of subscriber identity modules (SIMs) for a group of subscribers, wherein each subscriber shares a subscription, and wherein each subscriber in the group has a different mobile subscriber ISDN number (MSISDN).

The instructions of an embodiment, when executed in a mobile communication system, further cause the mobile communication system to configurea voicemail mailbox as a last number in a call forwarding order preference.

The order preferences of an embodiment are the same for all MSISDNs.

The order preferences of an embodiment are different for each MSISDN.

Call hunting of an embodiment comprises using a call forwarding method.

The instructions of an embodiment, when executed in a mobile communication system, further cause the mobile communication system to dynamically create a forwarding chain based on a current subscriber-configurable order preference.

The instructions of an embodiment, when executed in a mobile communication system, further cause the mobile communication system to fix a forwarding chain based on a particular instance of a subscriber-configurable order preference.

A last forwarding condition identification (ID) of an embodiment is set by the subscriber for an IMSI of the MSISDN on which the call being hunted was initiated.

Different IMSIs of an embodiment have different FTNs.

One FTP setting of an embodiment is associated with a single MSISDN that is associated with the service.

Call hunting of an embodiment comprises using a ISUP loopback method.

A PRN query of an embodiment is made by GMSC through HLR-H on IMSI-S to the operator for MT calls, and the operator returns #MSRN instead, wherein "#" is a logical notation for a prefix, and the GMSC is configured for ISUP loopback on the prefix.

Call hunting of an embodiment comprises using a IN method.

A PRN query of an embodiment is made by GSMC through HLR-H on IMSI-S to the operator for MT calls, and the operator returns #, wherein "#" is a logical notation for a prefix, and the GMSC is configured with a trigger on the prefix to inititate an IDP transaction to the operator.

The SMS hunting of an embodiment comprises SMS broadcast with the set of SIMs.

All of the SIMs in the set of SIMs of an embodiment have the service enabled.

Only one SIM of the set of SIMs of an embodiment has the service enabled.

Each SIM of the set of SIMs of an embodiment has its own phone number.

The instructions of an embodiment, when executed in a mobile communication system, further cause the mobile communication system to configure the set of SIMs using an over-the-air (OTA) interface.

The instructions of an embodiment, when executed in a mobile communication system, further cause the mobile communication system to specify a SIM to receive an OTA message by targeting an MSISDN.

The instructions of an embodiment, when executed in a mobile communication system, further cause the mobile communication system to specify a SIM to receive an OTA message by targeting an IMSI.

All of the SIMs in the set of SIMs of an embodiment share a voicemail mailbox.

Multiple MSISDNs of an embodiment are associated with different IMSIs in the set of SIMs.

The subscriber can configure any phone number as caller ID at any time in an embodiment.

A default caller ID of an embodiment is an MSISDN associated with an IMSI of the SIM used when a call is made.

The set of SIMs of an embodiment includes a principle SIM with an MSISDN that is a single MSISDN for the service that is used as a caller ID and a called/received number from a perspective of the subscriber, wherein the MSISDN is associated with multiple IMSIs in the set of SIMs.

The instructions of an embodiment, when executed in a mobile communication system, further cause the mobile communication system to designate IMSIs of the SIMs in the set of SIMs to be in a particular range.

All SIMs in the set of SIMs of an embodiment present a common caller ID in MO calls and SMSs to the outside world for local calls and roaming calls.

Single or multiple profiles are supported among the set of SIMs ofan embodiment.

A number originally called is identified regardless of which of the SIMs in the set of SIMs of an embodiment answers a call.

A number originally SMSed is identified regardless of which of the SIMs in the set of SIMs of an embodiment answers an SMS call.

An embodiment includes SMS broadcasting among the set of SIMs.

The SIMs in the set of SIMs of an embodiment share one voicemail mailbox.

The MT call and MT SMSs can be targeted to an individual SIM of the set of SIMs of an embodiment.

The instructions of an embodiment, when executed in a mobile communication system, further cause the mobile communication system to simultaneously actions allow and disallow actions for multiple SIMs, including multiple local calls, multiple roaming calls, some local calls, and some roaming calls.

The instructions of an embodiment, when executed in a mobile communication system, further cause the mobile communication system to apply billing actions can be to all SIMs in a set of SIMs.

Aspects of the MIMM/MISM system described herein may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the MIMM/MISM system include: microcontrollers with memory (such as electronically erasable programmable read only memory (EEPROM)), embedded microprocessors, firmware, software, etc. Furthermore, aspects of the MIMM/MISM system may be embodied in microprocessors having software-based circuit emulation, discrete logic (sequential and combinatorial), custom devices, fuzzy (neural) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

Further and particular aspects of the invention will now be enumerated by the following numbered clauses:
1. A computer readable medium having instructions store thereon, which when executed in a mobile communication system, cause the mobile communication system to:
   designate a set of subscriber identity modules (SIMs) for a subscriber, wherein the set of SIMs is registered to the subscriber; and wherein the set of SIMs comprises multiple SIMs, each of which is useable in one or more mobile communication devices, and each of which comprises a different IMSI;
   configure the set of SIMs and the network such that the subscriber presents a uniform appearance to entities communicating with the subscriber regardless of the SIM of the set of SIMs used for the communication, wherein the subscriber can simultaneously carry on a voice call on one SIM and carry on a data session on another SIM.
2. The computer readable medium of clause 1, wherein the instructions, when executed in a mobile communication system, further cause the mobile communication system to configure the set of SIMs and the network such that the subscriber can configure the SIMs in the set of SIMs to have different assigned behaviors.
3. The computer readable medium of clause 1, wherein the instructions, when executed in a mobile communication system, further cause the mobile communication system to configure the set of SIMs and the network to facilitate the subscriber configuring a plurality of subscriber-configurable features, including call forwarding, call hunting, SMS forwarding, and SMS hunting.
4. The computer readable medium of clause 3, wherein the subscriber-configurable features further include order preferences, and wherein order preferences comprise:
   a call forwarding order among the SIMs;
   a call hunting order among the SIMs; and
   a SMS forwarding order among the SIMS, and a SMS hunting order among the SIMs.
5. The computer readable medium of clause 3, wherein the subscriber can change a configuration of the subscriber-configurable features at any time; and wherein the subscriber can change the configuration using one or more of USSD, SMS, IVR, and a web interface.
6. The computer readable medium of clause 3, wherein the instructions, when executed in a mobile communication system, further cause the mobile communication system to prepare a single phone bill for the subscriber wherein usage of each of the SIMs in the set is represented separately.
7. The computer readable medium of clause 3, wherein the instructions, when executed in a mobile communication system, further cause the mobile communication system to designate a set of subscriber identity modules (SIMs) for a group of subscribers, wherein each subscriber shares a subscription, and wherein each subscriber in the group has a different mobile subscriber ISDN number (MSISDN).
8. The computer readable medium of clause 7, wherein the instructions, when executed in a mobile communication system, further cause the mobile communication system to configurea voicemail mailbox as a last number in a call forwarding order preference.
9. The computer readable medium of clause 7, wherein order preferences are the same for all MSISDNs.
10. The computer readable medium of clause 9, wherein order preferences are different for each MSISDN.
11. The computer readable medium of clause 3, wherein call hunting comprises using a call forwarding method.
12. The computer readable medium of clause 11 wherein the instructions, when executed in a mobile communication system, further cause the mobile communication system to dynamically create a forwarding chain based on a current subscriber-configurable order preference.
13. The computer readable medium of clause 11 wherein the instructions, when executed in a mobile communication system, further cause the mobile communication system to fix a forwarding chain based on a particular instance of a subscriber-cofigurable order preference.
14. The computer readable medium of clause 10 wherein a last forwarding condition identification (ID) is set by the subscriber for an IMSI of the MSISDN on which the call being hunted was initiated.
15. The computer readable medium of clause 14wherein different IMSIs have different FTNs.
16. The computer readable medium of clause 14 wherein one FTP setting is associated with a single MSISDN that is associated with the service.
17. The computer readable medium of clause 11 wherein call hunting comprises using a ISUP loopback method.
18. The computer readable medium of clause 17 wherein a PRN query is made by GMSC through HLR-H on IMSI-S to the operator for MT calls, and the operator returns #MSRN instead, wherein "#" is a logical notation for a prefix, and the GMSC is configured for ISUP loopback on the prefix.
19. The computer readable medium of clause 11 wherein call hunting comprises using a IN method.
20. The computer readable medium of clause 19 herein a PRN query is made by GSMC through HLR-H on IMSI-S to the operator for MT calls, and the operator returns #, wherein "#" is a logical notation for a prefix, and the GMSC is configured with a trigger on the prefix to inititate an IDP transaction to the operator.
21. The computer readable medium of clause 3 wherein SMS hunting comprises SMS broadcast with the set of SIMs.
22. The computer readable medium of clause 1, wherein all of the SIMs in the set of SIMs have the service enabled.
23. The computer readable medium of clause 1, wherein only one SIM of the set of SIMs has the service enabled.
24. The computer readable medium of clause 1, wherein each SIM of the set of SIMs has its own phone number.
25. The computer readable medium of clause 1, wherein the instructions, when executed in a mobile communication system, further cause the mobile communication system to configure the set of SIMs using an over-the-air (OTA) interface.
26. The computer readable medium of clause 25 wherein the instructions, when executed in a mobile communication system, further cause the mobile communication system to specify a SIM to receive an OTA message by targeting an MSISDN.
27. The computer readable medium of clause 25 wherein the instructions, when executed in a mobile communication system, further cause the mobile communication system to specify a SIM to receive an OTA message by targeting an IMSI.
28. The computer readable medium of clause 1, wherein all of the SIMs in the set of SIMs share a voicemail mailbox.
29. The computer readable medium of clause 1, wherein multiple MSISDNs are associated with different IMSIs in the set of SIMs.
30. The computer readable medium of clause 29 wherein the subscriber can configure any phone number as caller ID at any time.
31. The computer readable medium of clause 30 wherein a default caller ID is an MSISDN associated with an IMSI of the SIM used when a call is made.
32. The computer readable medium of clause 1, wherein the set of SIMs includes a principle SIM with an MSISDN that is a single MSISDN for the service that is used as a caller ID and a called/received number from a perspective of the subscriber, wherein the MSISDN is associated with multiple IMSIs in the set of SIMs.
33. The computer readable medium of clause 32 wherein the instructions, when executed in a mobile communication system, further cause the mobile communication system to designate IMSIs of the SIMs in the set of SIMs to be in a particular range.
34. The computer readable medium of clause 32 wherein all SIMs in the set of SIMs present a common caller ID in MO calls and SMSs to the outside world for local calls and roaming calls.
35. The computer readable medium of clause 32 wherein single or multiple profiles are supported among the set of SIMs.
36. The computer readable medium of clause 32 wherein a number originally called is identified regardless of which of the SIMs in the set of SIMs answers a call.
37. The computer readable medium of clause 32 wherein a number originally SMSed is identified regardless of which of the SIMs in the set of SIMs answers an SMS call.
38. The computer readable medium of clause 32 comprising SMS broadcasting among the set of SIMs.
39. The computer readable medium of clause 32 wherein the SIMs in the set of SIMs share one voicemail mailbox.
40. The computer readable medium of clause 32 wherein MT call and MT SMSs can be targeted to an individual SIM of the set of SIMs.
41. The computer readable medium of clause 32wherein the instructions, when executed in a mobile communication system, further cause the mobile communication system to simultaneously actions allow and disallow actions for multiple SIMs, including multiple local calls, multiple roaming calls, some local calls, and some roaming calls.
42. The computer readable medium of clause 32 wherein the instructions, when executed in a mobile communication system, further cause the mobile communication system to apply billing actions can be to all SIMs in a set of SIMs.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import, when used in this application, refer to this application as a whole and not to any particular portions of this application. When the word "or" is used in reference to a list of two or more items, that word covers all of the following interpretations of the word: any of the items in the list, all of the items in the list and any combination of the items in the list.

The above description of illustrated embodiments of the MIMM/MISM system is not intended to be exhaustive or to limit the system to the precise form disclosed. While specific embodiments of, and examples for, the MIMM/MISM system are described herein for illustrative purposes, various equivalent modifications are possible within the scope of the MIMM/MISM system, as those skilled in the relevant art will recognize. The teachings of the MIMM/MISM system provided herein can be applied to other processing systems and communication systems, not only for the MIMM/MISM system described above.

The elements and acts of the various embodiments described above can be combined to provide further embodiments. These and other changes can be made to the MIMM/MISM system in light of the above detailed description.

In general, in the following claims, the terms used should not be construed to limit the MIMM/MISM system to the specific embodiments disclosed in the specification and the claims, but should be construed to include all processing and communication systems that operate under the claims to provide the MIMM/MISM system. Accordingly, the MIMM/MISM system is not limited by the disclosure, but instead the scope of the system is to be determined entirely by the claims.

## Claims

1. A mobile communication method for a mobile communications network operator to provide a multiple international mobile subscriber identities, hereafter referred to as IMSIs, service to one or more subscribers, comprising:
the operator designating a set of subscriber identity modules, hereafter referred to as SIMs, for a subscriber, wherein the set of SIMs is registered to the subscriber; and wherein the set of SIMs comprises multiple SIMs, each of which is useable in one or more mobile communication devices, and each of which comprises a different IMSI;
configuring the set of SIMs and the network such that the subscriber presents a uniform appearance, on making and receiving communications, to entities communicating with the subscriber regardless of the SIM of the set of SIMs used for the communication, wherein the subscriber can simultaneously carry on a voice call on one SIM and carry on a data session on another SIM; and
wherein configuring the set of SIMs comprises receiving user input to configure the set of SIMs, including an order of preference, wherein the order of preference comprises a designation of which SIMs should receive a type of communication before another SIM, wherein the type of communication comprises voice communications and data communications.

2. The method of claim 1, wherein configuring the set of SIMs further comprises configuring the SIMs in the set of SIMs to have different assigned behaviors.

3. The method of claim 1, wherein configuring the set of SIMs further comprises configuring the set of SIMs and the network to facilitate the subscriber configuring a plurality of subscriber-configurable features, including call forwarding, call hunting, SMS forwarding, and SMS hunting.

4. The method of claim 3, wherein configuring the set of SIMs to have different assigned behaviors includes configuring order preferences, and wherein order preferences comprise: a call forwarding order among the SIMs, a call hunting order among the SIMs, a SMS forwarding order among the SIMS, and a SMS hunting order among the SIMs.

5. The method of claim 3, wherein the subscriber can change a configuration of the subscriber-configurable features at any time; and wherein the subscriber can change the configuration using one or more of USSD, SMS, IVR, and a web interface.

6. The method of claim 3, further comprising preparing a single phone bill for the subscriber wherein usage of each of the SIMs in the set is represented separately.

7. The method of claim 3, further comprising the operator designating a set of SIMs for a group of subscribers, wherein each subscriber shares a subscription, and wherein each subscriber in the group has a different mobile subscriber ISDN number, hereafter referred to as an MSISDN.

8. The method of claim 7, wherein order preferences are the same for all MSISDNs.

9. The method of claim 8, wherein order preferences are different for each MSISDN.

10. The method of claim 3, wherein call hunting comprises using a call forwarding method.

11. The method of claim 10, wherein a last forwarding condition identification is set by the subscriber for an IMSI of the MSISDN on which the call being hunted was initiated.

12. The method of claim 11, wherein different IMSIs have different FTNs.

13. The method of claim 3, wherein SMS hunting comprises SMS broadcast with the set of SIMs.

14. The method of claim 1, wherein all of the SIMs in the set of SIMs have the service enabled.

15. The method of claim 1, wherein only one SIM of the set of SIMs has the service enabled.

16. The method of claim 1, wherein each SIM of the set of SIMs has its own phone number.

17. The method of claim 1, wherein multiple MSISDNs are associated with different IMSIs in the set of SIMs.

18. The method of claim 17, wherein the subscriber can configure any phone number as caller ID at any time.

19. The method of claim 18, wherein a default caller ID is an MSISDN associated with an IMSI of the SIM used when a call is made.

20. The method of claim 1, wherein the set of SIMs includes a principle SIM with an MSISDN that is a single MSISDN for the service that is used as a caller ID and a called / received number from a perspective of the subscriber, wherein the MSISDN is associated with multiple IMSIs in the set of SIMs.

21. The method of claim 20, further comprising designating IMSIs of the SIMs in the set of SIMs to be in a particular range.

22. The method of claim 20, wherein all SIMs in the set of SIMs present a common caller ID in MO calls and SMSs to the outside world for local calls and roaming calls.

23. The method of claim 20, wherein single or multiple profiles are supported among the set of SIMs.

24. The method of claim 20, wherein a number originally called is identified regardless of which of the SIMs in the set of SIMs answers a call.

25. The method of claim 20, wherein a number originally SMSed is identified regardless of which of the SIMs in the set of SIMs answers an SMS call.

26. The method of claim 20, comprising SMS broadcasting among the set of SIMs.

27. The method of claim 20, wherein MT call and MT SMSs can be targeted to an individual SIM of the set of SIMs.

28. The method of claim 20, wherein simultaneous actions can be allowed and disallowed for multiple SIMs, including multiple local calls, multiple roaming calls, some local calls, and some roaming calls

29. The method of claim 20, wherein billing actions can be applied to all SIMs in a set of SIMs.

30. A signaling gateway system (200; 400) for a mobile communication network (206), the system comprising:
at least one signaling gateway (202; 402) configured to operate as a SCCP node and a service node, and further configured to host a MIMM/MISM service of a network operator; and
at least one GMSC/STP (204; 404) coupled to the at least one signaling gateway (202; 402), wherein the GMSC/STP (204; 404) is configured in its GTT function to route MAP messages on to the MIMM/MISM service through the at least one signaling gateway (202; 402);
wherein the MIMM/MISM service-includes,
designating a set of SIMs for a subscriber, wherein the set of SIMs is registered to the subscriber; and wherein the set of SIMs comprises multiple SIMs, each of which is useable in one or more mobile communication devices, and each of which comprises a different IMSI; and
configuring the set of SIMs and the network such that the subscriber presents a uniform appearance, on making and receiving communications, to entities communicating with the subscriber regardless of the SIM of the set of SIMs used for the communication, wherein the subscriber can simultaneously carry on a voice call on one SIM and carry on a data session on another SIM; and
wherein configuring the set of SIMs comprises receiving user input to configure the set of SIMs, including an order of preference, wherein the order of preference comprises a designation of which SIMs should receive a type of communication before another SIM, wherein the type of communication comprises voice communications and data communications.

31. The signaling gateway system of claim 30, wherein at least one GMSC/STP is coupled to the at least one signaling gateway via a SS7 node.

32. The signaling gateway system of claim 30, wherein the at least one signaling gateway comprises:
a HLR;
a VLR;
a SMSC;
a VMSC; and
a GMSC.

33. The signaling gateway system of claim 32, wherein the at least one signaling gateway fbrther comprises a memory that stores subscriber registration states, and signaling gateway GT mapping to network elements of the operator's network.

34. The signaling gateway system of claim 32, wherein the at least one signaling gateway further comprises a watchdog process that oversees the state of processes on the at least one signaling gateway.

35. The signaling gateway system of claim 32, wherein the at least one signaling gateway further comprises a SNMP agent and a MIB.

36. The signaling gateway system of claim 32, wherein the at least one signaling gateway further comprises a SCCP GTT interface.

37. The signaling gateway system of claim 32, wherein the at least one signaling gateway further comprises a MTP3 routing table.

38. The signaling gateway system of claim 32, wherein the at least one signaling gateway includes multiple signaling gateways each cross-connecied to the at least one GMSC/STP of HPMN over E1/T1.

39. The signaling gateway system of claim 32, wherein the all of the at least one signaling gateways have a same signal point code (SPC0) and a same global title (GT0).

40. The signaling gateway system of claim 32, wherein the each of the at least one signaling gateways is assigned an identical pool of GTs created by appending characters to a common GT (GT0).

41. The signaling gateway system of claim 39, further comprising a GT-H version and a GT-F version of GT0, wherein GT-H impersonates the signaling gateway as a HPMN network element.

42. The signaling gateway system of claim 32, wherein a GGT function of the at least one GMSC/STP translates GTT prefixes to a destination point code of the at least one signaling gateway.

43. The signaling gateway system of claim 32, wherein a GGT function of the at least one GMSC/STP translates a MGT E-214 address range from the special IMSI range of the subscriber to a common SPC 0 of the at least one signaling gateway.

44. The signaling gateway system of claim 32, wherein upon failure of at least one signaling gateway, subscribers revert to normal subscribers with multiple SIMs and multiple MSISDNS.

45. A computer program, comprising computer program elements for implementing the method of any one of the claims 1 to 29.

46. A computer program, comprising computer program elements for implementing the system of any one of claims 30 to 44.

47. A computer usable carrier medium carrying a computer program according to claim 45 or claim 46.

## Patentansprüche

1. Mobilkommunikationsverfahren für einen Mobilkommunikationsnetz-Betreiber zum Bereitstellen eines Dienstes mehrfacher internationaler Mobilteilnehmeridentitäten, die im Folgenden als IMSI bezeichnet werden, für einen oder mehrere Teilnehmer, mit den folgenden Schritten:
der Betreiber designiert eine Menge von Teilnehmeridentitätsmodulen, die im Folgenden als SIM bezeichnet werden, für einen Teilnehmer, wobei die Menge von SIM auf den Teilnehmer registriert ist; und wobei die Menge von SIM mehrfache SIM umfasst, die jeweils in einem oder mehreren Mobilkommunikationsgeräten verwendbar sind und die jeweils eine verschiedene IMSI umfassen;
Konfigurieren der Menge von SIM und des Netzes dergestalt, dass der Teilnehmer beim Herstellen und Empfangen von Übermittlungen gegenüber mit dem Teilnehmer kommunizierenden Entitäten ungeachtet des für die Kommunikation verwendeten SIM der Menge von SIM ein gleichförmiges Aussehen präsentiert, wobei der Teilnehmer gleichzeitig auf einem SIM eine Sprachverbindung und auf einem anderen SIM eine Datensitzung ausführen kann; und
wobei das Konfigurieren der Menge von SIM das Empfangen von Benutzereingaben zum Konfigurieren der Menge von SIM einschließlich einer Präferenzreihenfolge umfasst, wobei die Präferenzreihenfolge eine Kennzeichnung umfasst, welches SIM vor einem anderen SIM eine Art von Kommunikation empfangen sollten, wobei die Art von Kommunikation Sprachkommunikation und Datenkommunikation umfasst.

2. Verfahren nach Anspruch 1, wobei das Konfigurieren der Menge von SIM ferner umfasst, die SIM in der Menge von SIM so zu konfigurieren, dass sie verschiedene zugewiesene Verhaltensweisen aufweisen.

3. Verfahren nach Anspruch 1, wobei das Konfigurieren der Menge von SIM ferner umfasst, die Menge von SIM und das Netz so zu konfigurieren, dass es ermöglicht wird, dass der Teilnehmer mehrere teilnehmerkonfigurierbare Merkmale konfiguriert, darunter Anrufweiterleitung, Anruf-Hunting, SMS-Weiterleitung und SMS-Hunting.

4. Verfahren nach Anspruch 3, wobei das Konfigurieren der Menge von SIM, so dass sie verschiedene zugewiesene Verhaltensweisen aufweisen, das Konfigurieren von Reihenfolgepräferenzen umfasst und wobei Reihenfolgepräferenzen Folgendes umfassen: eine Anrufweiterleitungsreihenfolge zwischen den SIM, eine Anruf-Hunting-Reihenfolge zwischen den SIM, eine SMS-Weiterleitungsreihenfolge zwischen den SIM und eine SMS-Hunting-Reihenfolge zwischen den SIM.

5. Verfahren nach Anspruch 3, wobei der Teilnehmer eine Konfiguration der teilnehmerkonfigurierbaren Merkmale jederzeit ändern kann; und wobei der Teilnehmer die Konfiguration unter Verwendung einer oder mehrerer der folgenden Alternativen ändern kann: USSD, SMS, IVR und eine Web-Schnittstelle.

6. Verfahren nach Anspruch 3, ferner mit dem Schritt des Erstellens einer einzigen Telefonrechnung für den Teilnehmer, wobei die Benutzung jedes der SIM in der Menge separat repräsentiert wird.

7. Verfahren nach Anspruch 3, bei dem ferner der Betreiber eine Menge von SIM für eine Gruppe von Teilnehmern designiert, wobei sich jeder Teilnehmer eine Subskription teilt und wobei jeder Teilnehmer in der Gruppe eine andere Mobilteilnehmer-ISDN-Nummer, die im Folgenden als MSISDN bezeichnet wird, aufweist.

8. Verfahren nach Anspruch 7, wobei die Reihenfolgepräferenzen für alle MSISDN dieselben sind.

9. Verfahren nach Anspruch 8, wobei die Reihenfolgepräferenzen für jede MSISDN verschieden sind.

10. Verfahren nach Anspruch 3, wobei das Anruf-Hunting die Verwendung einer Anrufweiterleitungsmethode umfasst.

11. Verfahren nach Anspruch 10, wobei der Teilnehmer für eine IMSI der MSISDN, auf der der gehuntete Anruf eingeleitet wurde, eine Letzte-Weiterleitungs-Bedingungs-Identifikation setzt.

12. Verfahren nach Anspruch 11, wobei verschiedene IMSI verschiedene FTN aufweisen.

13. Verfahren nach Anspruch 3, wobei das SMS-Hunting SMS-Rundsenden mit der Menge von SIM umfasst.

14. Verfahren nach Anspruch 1, wobei bei allen SIM in der Menge von SIM der Dienst freigegeben ist.

15. Verfahren nach Anspruch 1, wobei nur bei einem SIM der Menge von SIM der Dienst freigegeben ist.

16. Verfahren nach Anspruch 1, wobei jedes SIM der Menge von SIM seine eigene Rufnummer aufweist.

17. Verfahren nach Anspruch 1, wobei mehrfache MSISDN mit verschiedenen IMSI in der Menge von SIM assoziiert sind.

18. Verfahren nach Anspruch 17, wobei der Teilnehmer jede beliebige Rufnummer jederzeit als Anrufer-ID konfigurieren kann.

19. Verfahren nach Anspruch 18, wobei eine Vorgabe-Anrufer-ID eine MSISDN ist, die mit einer IMSI des SIM assoziiert ist, das verwendet wird, wenn ein Anruf getätigt wird.

20. Verfahren nach Anspruch 1, wobei die Menge von SIM ein Haupt-SIM mit einer MSISDN enthält, die eine einzige MSISDN für den Dienst ist, die als Anrufer-ID und angerufene bzw. empfangene Nummer von der Perspektive des Teilnehmers aus gesehen verwendet wird, wobei die MSISDN mit mehreren IMSI in der Menge von SIM assoziiert ist.

21. Verfahren nach Anspruch 20, ferner mit dem Schritt des Designierens von IMSI der SIM in der Menge von SIM dergestalt, dass sie in einem bestimmten Bereich liegen.

22. Verfahren nach Anspruch 20, wobei alle SIM in der Menge von SIM gegenüber der Außenwelt für Ortsanrufe und Roaming-Anrufe bei MO-Anrufen und SMS eine gemeinsame Anrufer-ID präsentieren.

23. Verfahren nach Anspruch 20, wobei einzelne oder mehrere Profile unter der Menge von SIM unterstützt werden.

24. Verfahren nach Anspruch 20, wobei eine ursprünglich angerufene Nummer identifiziert wird, gleichgültig welches der SIM in der Menge von SIM einen Anruf entgegennimmt.

25. Verfahren nach Anspruch 20, wobei eine Nummer, der ursprünglich SMS gesendet wurde, identifiziert wird, gleichgültig, welches der SIM in der Menge von SIM einen Anruf entgegennimmt.

26. Verfahren nach Anspruch 20 mit dem Schritt des SMS-Rundsendens unter der Menge von SIM.

27. Verfahren nach Anspruch 20, wobei ein MT-Anruf und MT-SMS auf ein individuelles SIM der Menge von SIM abgezielt werden können.

28. Verfahren nach Anspruch 20, wobei gleichzeitige Aktionen für mehrere SIM erlaubt und verboten werden können, darunter mehrfache Ortsanrufe, mehrfache Roaming-Anrufe, bestimmte Ortsanrufe und bestimmte Roaming-Anrufe.

29. Verfahren nach Anspruch 20, wobei Vergebührungsaktionen auf alle SIM in einer Menge von SIM angewandt werden können.

30. Signalisierungs-Gateway-System (200; 400) für ein Mobilkommunikationsnetz (206), wobei das System Folgendes umfasst:
mindestens ein Signalisierungs-Gateway (202; 402), das dafür ausgelegt ist, als ein SCCP-Knoten und ein Dienstknoten zu operieren, und das ferner dafür ausgelegt ist, Host für einen MIMM/MISM-Dienst eines Netzbetreibers zu sein; und
mindestens einen mit dem mindestens einen Signalisierungs-Gateway (202; 402) gekoppelten GMSC/STP (204; 404), wobei der GMSC/STP (204; 404) in seiner GTT-Funktion dafür ausgelegt ist, MAP-Nachrichten über Teilnehmer durch das mindestens eine Signalisierungs-Gateway (202; 402) zu dem MIMM/MISM-Dienst zu routen,
wobei der MIMM/MISM-Dienst Folgendes umfasst:
Designieren einer Menge von SIM für einen Teilnehmer, wobei die Menge von SIM auf den Teilnehmer registriert ist; und wobei die Menge von SIM mehrere SIM umfasst, die jeweils in einem oder mehreren Mobilkommunikationsgeräten verwendbar sind und die jeweils verschiedene IMSI umfassen; und
Konfigurieren der Menge von SIM und des Netzes dergestalt, dass der Teilnehmer beim Herstellen und Empfangen von Übermittlungen gegenüber mit dem Teilnehmer kommunizierenden Entitäten ungeachtet des für die Kommunikation verwendeten SIM der Menge von SIM ein gleichförmiges Aussehen präsentiert, wobei der Teilnehmer gleichzeitig auf einem SIM eine Sprachverbindung und auf einem anderen SIM eine Datensitzung ausführen kann; und
wobei das Konfigurieren der Menge von SIM das Empfangen von Benutzereingaben zum Konfigurieren der Menge von SIM einschließlich einer Präferenzreihenfolge umfasst, wobei die Präferenzreihenfolge eine Kennzeichnung umfasst, welche SIM vor einem anderen SIM eine Art von Kommunikation empfangen sollten, wobei die Art von Kommunikation Sprachkommunikationen und Datenkommunikationen umfasst.

31. Signalisierungs-Gateway-System nach Anspruch 30, wobei mindestens ein GMSC/STP über einen SS7-Knoten mit dem mindestens einen Signalisierungs-Gateway gekoppelt ist.

32. Signalisierungs-Gateway-System nach Anspruch 30, wobei das mindestens eine Signalisierungs-Gateway Folgendes umfasst:
ein HLR;
ein VLR;
eine SMSC;
eine VMSC; und
eine GMSC.

33. Signalisierungs-Gateway-System nach Anspruch 32, wobei das mindestens eine Signalisierungs-Gateway ferner einen Speicher umfasst, der Teilnehmerregistrationszustände speichert und die Signalisierungs-Gateway-GT-Abbildung auf Netzelemente des Netzes des Betreibers speichert.

34. Signalisierungs-Gateway-System nach Anspruch 32, wobei das mindestens eine Signalisierungs-Gateway ferner einen Watchdog-Prozess umfasst, der über den Zustand von Prozessen auf dem mindestens einen Signalisierungs-Gateway wacht.

35. Signalisierungs-Gateway-System nach Anspruch 32, wobei das mindestens eine Signalisierungs-Gateway ferner einen SNMP-Agenten und eine MIB umfasst.

36. Signalisierungs-Gateway-System nach Anspruch 32, wobei das mindestens eine Signalisierungs-Gateway ferner eine SCCP-GTT-Schnittstelle umfasst.

37. Signalisierungs-Gateway-System nach Anspruch 32, wobei das mindestens eine Signalisierungs-Gateway ferner eine MTP3-Routingtabelle umfasst.

38. Signalisierungs-Gateway-System nach Anspruch 32, wobei das mindestens eine Signalisierungs-Gateway mehrere Signalisierungs-Gateways umfasst, die jeweils über E1/T1 mit dem mindestens einen GMSC/STP von HPMN querverbunden sind.

39. Signalisierungs-Gateway-System nach Anspruch 32, wobei von dem mindestens einen Signalisierungs-Gateway alle einen selben Signalpunktcode (SPC0) und einen selben globalen Titel (GT0) aufweisen.

40. Signalisierungs-Gateway-System nach Anspruch 32, wobei jedem des mindestens einen Signalisierungs-Gateways ein identischer Pool von GT zugewiesen wird, die durch Anhängen von Zeichen an einen gemeinsamen GT (GT0) erzeugt werden.

41. Signalisierungs-Gateway-System nach Anspruch 39, ferner mit einer GT-H-Version und einer GT-F-Version von GTO, wobei sich GT-H als ein HPMN-Netzelement für das Signalisierungs-Gateway ausgibt.

42. Signalisierungs-Gateway-System nach Anspruch 32, wobei eine GGT-Funktion des mindestens einen GMSC/STP GTT-Präfixe in einen Zielpunktcode des mindestens einen Signalisierungs-Gateway übersetzt.

43. Signalisierungs-Gateway-System nach Anspruch 32, wobei eine GGT-Funktion des mindestens einen GMSC/STP einen MGT-E-214-Adressenbereich aus dem speziellen IMSI-Bereich des Teilnehmers in einen gemeinsamen SPC 0 des mindestens einen Signalisierungs-Gateway übersetzt.

44. Signalisierungs-Gateway-System nach Anspruch 32, wobei beim Ausfall mindestens eines Signalisierungs-Gateway Teilnehmer wieder normale Teilnehmer mit mehrfachen SIM und mehrfachen MSISDN werden.

45. Computerprogramm mit Computerprogrammelementen zum Implementieren des Verfahrens nach einem der Ansprüche 1 bis 29.

46. Computerprogramm mit Computerprogrammelementen zum Implementieren des Verfahrens nach einem der Ansprüche 30 bis 44.

47. Computerbenutzbares Trägermedium, das ein Computerprogramm nach Anspruch 45 oder Anspruch 46 trägt.

## Revendications

1. Procédé de communications mobiles pour un opérateur de réseau de communications mobiles en vue de fournir un service de multiples identités internationales d'abonné mobile, appelées ci-après IMSI, à un ou plusieurs abonnés, comprenant :
la désignation par l'opérateur d'un ensemble de modules d'identité d'abonné, appelés ci-après SIM, l'ensemble de SIM étant enregistré comme appartenant à l'abonné ; et l'ensemble de SIM comprenant de multiples SIM, qui sont chacun utilisables dans un ou plusieurs dispositifs de communications mobiles, et qui comprennent chacun une IMSI différente ;
la configuration de l'ensemble de SIM et du réseau de telle sorte que l'abonné ait une représentation uniforme quand il effectue et reçoit des communications, auprès d'entités qui communiquent avec l'abonné quel que soit le SIM de l'ensemble de SIM utilisé pour la communication, dans lequel l'abonné peut effectuer simultanément un appel vocal sur un SIM et effectuer une session de données sur un autre SIM ; et
dans lequel la configuration de l'ensemble de SIM comprend la réception d'une entrée d'utilisateur pour configurer l'ensemble de SIM, y compris un ordre de préférence, l'ordre de préférence comprenant une désignation des SIM qui devraient recevoir un type de communication avant un autre SIM, le type de communication comprenant les communications vocales et les transmissions de données.

2. Procédé selon la revendication 1, dans lequel la configuration de l'ensemble de SIM comprend en outre la configuration des SIM dans l'ensemble de SIM pour qu'ils aient des comportements assignés différents.

3. Procédé selon la revendication 1, dans lequel la configuration de l'ensemble de SIM comprend en outre la configuration des SIM et du réseau pour faciliter la configuration par l'abonné d'une pluralité de caractéristiques configurables par l'abonné, dont le renvoi automatique d'appel, la recherche d'appel, le renvoi automatique de SMS, et la recherche de SMS.

4. Procédé selon la revendication 3, dans lequel la configuration de l'ensemble de SIM pour qu'ils aient des comportements assignés différents comporte la configuration de préférences d'ordre, et dans lequel les préférences d'ordre comprennent : un ordre de renvoi automatique d'appel parmi les SIM, un ordre de recherche d'appel parmi les SIM, un ordre de renvoi automatique de SMS parmi les SIM et un ordre de recherche de SMS parmi les SIM.

5. Procédé selon la revendication 3, dans lequel l'abonné peut changer une configuration des caractéristiques configurables par l'abonné à n'importe quel moment ; et dans lequel l'abonné peut changer la configuration en utilisant un ou plusieurs d'USSD, SMS, IVR et interface Web.

6. Procédé selon la revendication 3, comprenant en outre la préparation d'une facture de téléphone unique de l'abonné dans laquelle l'utilisation de chacun des SIM dans l'ensemble est représentée séparément.

7. Procédé selon la revendication 3, comprenant en outre la désignation par l'opérateur d'un ensemble de SIM pour un groupe d'abonnés, chaque abonné partageant un abonnement, et dans lequel chaque abonné dans le groupe a un numéro RNIS d'abonné mobile différent, appelé ci-après MSISDN.

8. Procédé selon la revendication 7, dans lequel des préférences d'ordre sont les mêmes pour tous les MSISDN.

9. Procédé selon la revendication 8, dans lequel des préférences d'ordre sont différentes pour chaque MSISDN.

10. Procédé selon la revendication 3, dans lequel la recherche d'appel comprend l'utilisation d'un procédé de renvoi automatique d'appel.

11. Procédé selon la revendication 10, dans lequel une identification de dernière condition de renvoi automatique est établie par l'abonné pour une IMSI du MSISDN sur lequel l'appel recherché a été lancé.

12. Procédé selon la revendication 11, dans lequel différentes IMSI ont différents FTN.

13. Procédé selon la revendication 3, dans lequel la recherche de SMS comprend la diffusion de SMS avec l'ensemble de SIM.

14. Procédé selon la revendication 1, dans lequel tous les SIM dans l'ensemble de SIM ont le service activé.

15. Procédé selon la revendication 1, dans lequel un seul des SIM dans l'ensemble de SIM a le service activé.

16. Procédé selon la revendication 1, dans lequel chaque SIM de l'ensemble de SIM a son propre numéro de téléphone.

17. Procédé selon la revendication 1, dans lequel de multiples MSISDN sont associés à différentes IMSI dans l'ensemble de SIM.

18. Procédé selon la revendication 17, dans lequel l'abonné peut configurer n'importe quel numéro de téléphone comme ID d'appelant à tout moment.

19. Procédé selon la revendication 18, dans lequel une ID d'appelant par défaut est un MSISDN associé à une IMSI du SIM utilisé quand un appel est effectué.

20. Procédé selon la revendication 1, dans lequel l'ensemble de SIM comporte un SIM principal avec un MSISDN qui est un MSISDN unique pour le service qui est utilisé comme ID d'appelant et un numéro reçu/appelé du point de vue de l'abonné, dans lequel le MSISDN est associé à de multiples IMSI dans l'ensemble de SIM.

21. Procédé selon la revendication 20, comprenant en outre la désignation dans une gamme particulière des IMSI des SIM dans l'ensemble de SIM.

22. Procédé selon la revendication 20, dans lequel tous les SIM dans l'ensemble de SIM présentent une ID d'appelant commune dans les appels MO et les SMS vers l'extérieur pour les appels locaux et les appels itinérants.

23. Procédé selon la revendication 20, dans lequel des profils uniques ou multiples sont supportés parmi l'ensemble de SIM.

24. Procédé selon la revendication 20, dans lequel un numéro initialement appelé est identifié quel que soit celui des SIM dans l'ensemble de SIM qui répond à un appel.

25. Procédé selon la revendication 20, dans lequel un numéro initialement appelé par SMS est identifié quel que soit celui des SIM dans l'ensemble des SIM qui répond à un appel SMS.

26. Procédé selon la revendication 20, comprenant la diffusion de SMS parmi l'ensemble de SIM.

27. Procédé selon la revendication 20, dans lequel un appel MT et des SMS MT peuvent être ciblés sur un SIM individuel de l'ensemble de SIM.

28. Procédé selon la revendication 20, dans lequel des actions simultanées peuvent être autorisées et interdites pour de multiples SIM, dont de multiples appels locaux, de multiples appels itinérants, certains appels locaux et certains appels itinérants.

29. Procédé selon la revendication 20, dans lequel des actions de facturation peuvent être appliquées à tous les SIM dans un ensemble de SIM.

30. Système passerelle de signalisation (200; 400) pour réseau de communications mobiles (206), le système comprenant :
au moins une passerelle de signalisation (202 ; 402) configurée pour fonctionner comme noeud SCCP et noeud de service, et configurée en outre pour abriter un service MIMM/MISM d'un opérateur de réseau ; et
au moins un GMSC/STP (204 ; 404) couplé à l'au moins une passerelle (202 ; 402), le GMSC/STP (204 ; 404) étant configuré dans sa fonction GTT pour router des messages MAP sur les abonnés au service MIMM/MISM par le biais de l'au moins une passerelle de signalisation (202 ; 402);
dans lequel le service MIMM/MISM comporte :
la désignation d'un ensemble de SIM d'un abonné, l'ensemble de SIM étant enregistré comme appartenant à l'abonné ; et l'ensemble de SIM comprenant de multiples SIM, qui sont chacun utilisables dans un ou plusieurs dispositifs de communications mobiles, et qui comprennent chacun une IMSI différente ; et
la configuration de l'ensemble de SIM et du réseau de telle sorte que l'abonné présente une apparition uniforme quand il effectue et reçoit des communications, auprès d'entités qui communiquent avec l'abonné quel que soit le SIM de l'ensemble de SIM utilisé pour la communication, dans lequel l'abonné peut effectuer simultanément un appel vocal sur un SIM et effectuer une session de données sur un autre SIM ; et
dans lequel la configuration de l'ensemble de SIM comprend la réception d'une entrée d'utilisateur pour configurer l'ensemble de SIM, y compris un ordre de préférence, l'ordre de préférence comprenant une désignation des SIM qui devraient recevoir un type de communication avant un autre SIM, le type de communication comprenant les communications vocales et les transmissions de données.

31. Système passerelle de signalisation selon la revendication 30, dans lequel au moins un GMSC/STP est couplé à l'au moins une passerelle de signalisation par l'intermédiaire d'un noeud SS7.

32. Système passerelle de signalisation selon la revendication 30, dans lequel l'au moins une passerelle de signalisation comprend :
un HLR ;
un VLR ;
un SMSC ;
un VMSC ; et
un GMSC.

33. Système passerelle de signalisation selon la revendication 32, dans lequel l'au moins une passerelle comprend en outre une mémoire qui mémorise des états d'enregistrement d'abonné, et la mise en correspondance GT de la passerelle de signalisation avec des éléments de réseau du réseau de l'opérateur.

34. Système passerelle de signalisation selon la revendication 32, dans lequel l'au moins une passerelle de signalisation comprend en outre un processus de chien de garde qui supervise l'état des processus sur l'au moins une passerelle de signalisation.

35. Système passerelle de signalisation selon la revendication 32, dans lequel l'au moins une passerelle de signalisation comprend en outre un agent SNMP et une base de données MIB.

36. Système passerelle de signalisation selon la revendication 32, dans lequel l'au moins une passerelle de signalisation comprend en outre une interface SCCP GTT.

37. Système passerelle de signalisation selon la revendication 32, dans lequel l'au moins une passerelle de signalisation comprend en outre une table de routage MTP3.

38. Système passerelle de signalisation selon la revendication 32, dans lequel l'au moins une passerelle de signalisation comprend de multiples passerelles de signalisation interconnectées chacune à l'au moins un GMSC/STP du HPMN sur une ligne E1/T1.

39. Système passerelle de signalisation selon la revendication 32, dans lequel toutes les au moins une passerelle de signalisation ont un même code de point de signal (SPC0) et un même titre global (GT0).

40. Système passerelle de signalisation selon la revendication 32, dans lequel à chacune des au moins une passerelle de signalisation est assigné un groupe identique de GT créé en ajoutant des caractères à un GT commun (GT0).

41. Système passerelle de signalisation selon la revendication 39, comprenant en outre une version GT-H et une version GT-F de GT0, GT-H personnifiant la passerelle de signalisation comme élément de réseau HPMN.

42. Système passerelle de signalisation selon la revendication 32, dans lequel une fonction GGT de l'au moins un GMSC/STP traduit les préfixes GTT en un code de point destinataire de l'au moins une passerelle de signalisation.

43. Système passerelle de signalisation selon la revendication 32, dans lequel une fonction GGT de l'au moins un GMSC/STP traduit une gamme d'adresses E-214 MGT de la gamme IMSI spéciale de l'abonné en un SPC 0 commun de l'au moins une passerelle de signalisation.

44. Système passerelle de signalisation selon la revendication 32, dans lequel à la défaillance de l'au moins une passerelle de signalisation, les abonnés redeviennent des abonnés normaux à SIM multiples et MSISDN multiples.

45. Programme informatique, comprenant des éléments de programme informatique pour mettre en oeuvre le procédé selon l'une quelconque des revendications 1 à 29.

46. Programme informatique, comprenant des éléments de programme informatique pour mettre en oeuvre le système selon l'une quelconque des revendications 30 à 44.

47. Support utilisable par ordinateur portant un programme informatique selon la revendication 45 ou la revendication 46.
